# EUROPEAN PATENT APPLICATION

(11) **EP 4 694 023 A2**
(43) Date of publication of application: **11.02.2026**
(21) Application number: 24735134.9
(22) Date of filing: 04.04.2024
(51) Int. Cl.: H04L 5/14, H04L 5/00, H04L 5/16, H04W 72/04

(54) **OPERATION METHOD OF DEVICE IN WIRELESS COMMUNICATION SYSTEM, AND DEVICE USING METHOD**

(30) Priority: 06.04.2023 US 202363457776 P
(71) Applicant: LG ELECTRONICS, INC., Seoul 07336 (KR)
(72) Inventor: YOU, Hyangsun, Seoul 06772 (KR); KO, Hyunsoo, Seoul 06772 (KR); KIM, Seonwook, Seoul 06772 (KR)
(74) Representative: Maikowski & Ninnemann Patentanwälte Partnerschaft mbB
(86) International application number: PCT/KR2024/004393
(87) International publication number: WO 2024/210547

(57) **Abstract**

Provided are a device operation method and a device in a wireless communication system. The device receives time division duplex (TDD) configuration information for a link direction and receives type configuration information informing a full duplex (FD) type or a half duplex (HD) type. In this case, the FD type is a duplex type capable of simultaneously performing uplink operation and downlink operation using different frequency bands within a slot, and the HD type is a duplex type capable of performing either uplink operation or downlink operation within a slot. For a specific slot comprising symbols having different link directions, the type configuration information independently informs the FD type or the HD type for the symbols having different link directions.

## Description

### TECHNICAL FIELD

This disclosure relates to a method of operating a device in a wireless communication system and a device using the method.

### BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR, full duplex (FD) operation can be performed. When performing FD operation, downlink reception and uplink transmission can occur simultaneously in a given time resource. Half duplex (HD) operation differs in that only one of downlink reception and uplink transmission can be performed in a given time resource. For FD operation, i) in the same time resource, some frequency resources may be allocated to downlink subbands and other frequency resources to uplink subbands, or ii) frequency resources may be allocated that can be used for both downlink reception and uplink transmission in the same time resource.

Meanwhile, when the cell operates in FD, the user equipment (UE) receives information about the time resources for which the cell operates in FD, and can determine the FD operation time resources from this.

In order to indicate a time resource operating in FD, a decision on the minimum unit (granularity) of the indication is necessary. At this time, two aspects need to be considered.

First, the presence of FD symbols that can perform FD operations and non-FD symbols (e.g., HD symbols) that perform non-FD operations (e.g., HD operations) within a single slot may be undesirable considering the way the signal/channel is transmitted and received and the complexity of the UE operation. Considering this aspect, it may be desirable to indicate the FD operation time resources on a slot-by-slot basis.

Second, if a slot contains a downlink symbol, a flexible symbol, and/or an uplink symbol, the flexible symbol may be used for either downlink or uplink. This means that there may be symbols in the slot with different link directions, in which case it may be necessary to indicate FD operation time resources on a per-symbol basis.

Considering these aspects, a method for indicating FD operation time resources and a method and device for operating accordingly are needed.

### DISCLOSURE

### TECHNICAL PROBLEM

The technical problem that the present disclosure aims to solve is to provide a method of operating a device in a wireless communication system and a device that uses the method.

### TECHNICAL SOLUTION

In one aspect, provided is a method of operating a user equipment (UE) in a wireless communication system. The method includes receiving time division duplex (TDD) configuration information for a link direction and receiving type configuration information informing a full duplex (FD) type or a half duplex (HD) type. Here, the FD type is a duplex type capable of simultaneously performing uplink operation and downlink operation using different frequency bands within a slot, and the HD type is a duplex type capable of performing either uplink operation or downlink operation within a slot. For a specific slot comprising symbols having different link directions, the type configuration information independently informs the FD type or the HD type for the symbols having different link directions.

In another aspect, provided are a UE, an apparatus and computer readable medium (CRM) performing the method.

In still another aspect, provided are a method of operating a base station, and a base station using the method. According to the method of operating the base station, the base station transmits, to a user equipment (UE), time division duplex (TDD) configuration information for a link direction and transmits, to the UE, type configuration information informing a full duplex (FD) type or a half duplex (HD) type. Here, the FD type is a duplex type capable of simultaneously performing uplink operation and downlink operation using different frequency bands within a slot, and the HD type is a duplex type capable of performing either uplink operation or downlink operation within a slot. For a specific slot comprising symbols having different link directions, the type configuration information independently informs the FD type or the HD type for the symbols having different link directions.

### ADVANTAGEOUS EFFECTS

According to the method according to the present disclosure, basically, FD operation time resource information is instructed on a slot-by-slot basis to avoid unnecessary transitions between FD and non-FD symbols within a slot, but when symbols with different link directions (downlink, flexible, uplink) are present together in a specific slot, the FD type and non-FD type can be instructed independently according to the link direction. This has the advantageous effect of increasing communication efficiency and avoiding unnecessary interference.

### BRIEF DESCRIPTION OF THE DRAWINGS

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure of an NR frame.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 shows examples of how to apply full duplex within an intra-carrier.
FIG. 13 shows an example in which a time resource operating in half duplex (HD) and a time resource operating in full duplex (FD) such as SBFD or SS-FD exist together.
FIG. 14 shows examples of first time resource, second time resource, first frequency resource and second frequency resource.
FIG. 15 shows another example of a first time resource, a second time resource, a first frequency resource, and a second frequency resource.
FIG. 16 shows an example of the SBFD symbol resource configuration when N=2 (i.e., period = (P+P2)*2 msec) and N'=0 (i.e., offset = (P+P2)*0 = 0 msec).
FIG. 17 shows an example of SBFD symbol resource configuration when N=2 (i.e., period = (P+P2)*2 msec), N'=0 (i.e., offset = (P+P2)*0 = 0 msec), and TDD pattern = pattern2.
FIG. 18 shows an example of the U/F/D direction type.
FIG. 19 illustrates a method of operating a UE in a wireless communication system.
FIG. 20 illustrates signaling and operation methods between a base station and a UE.
FIG. 21 illustrates a wireless device that can be applied the present specification.
FIG. 22 shows an example of a signal processing module structure.
FIG. 23 shows another example of the structure of a signal processing module in a transmission device.
FIG. 24 shows an example of a wireless communication device according to an implementation example of the present disclosure.
FIG. 25 shows an example of the processor 2000.
FIG. 26 shows an example of the processor 3000.
FIG. 27 shows another example of a wireless device.
FIG. 28 shows another example of a wireless device applied to the present specification.
FIG. 29 illustrates the communication system 1 applied to this specification.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

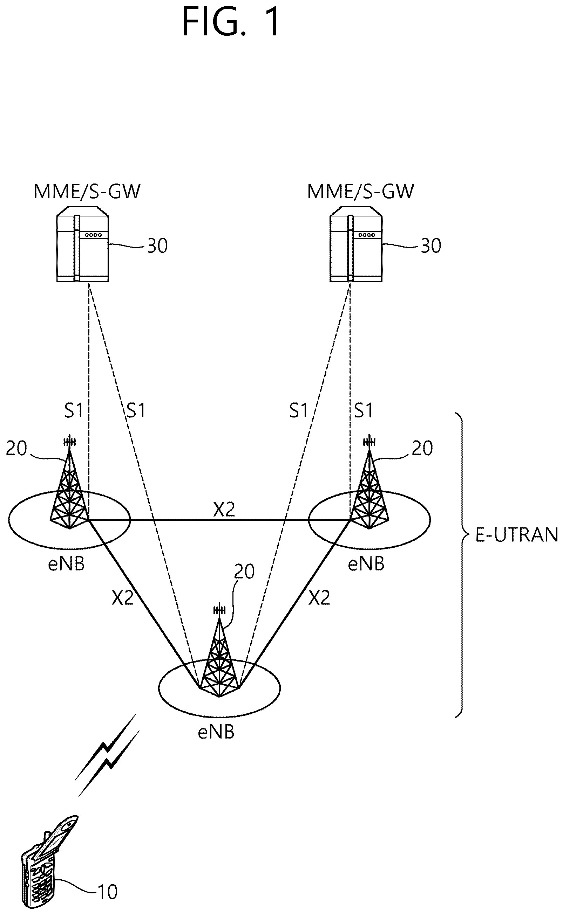

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

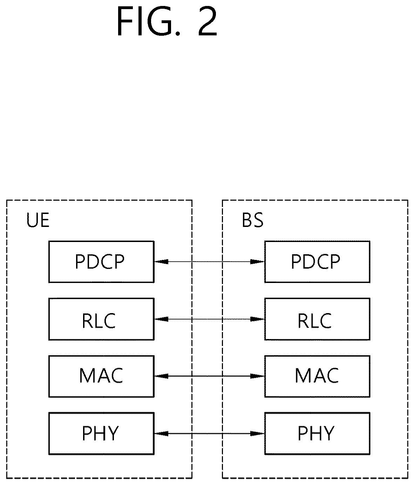

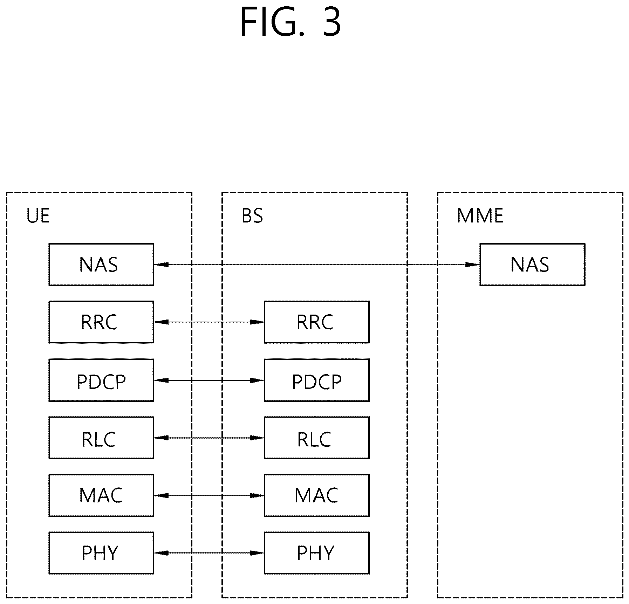

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

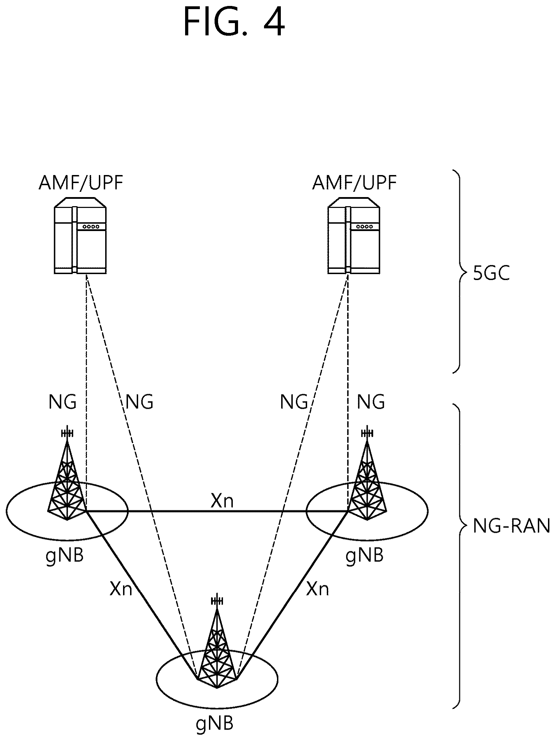

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

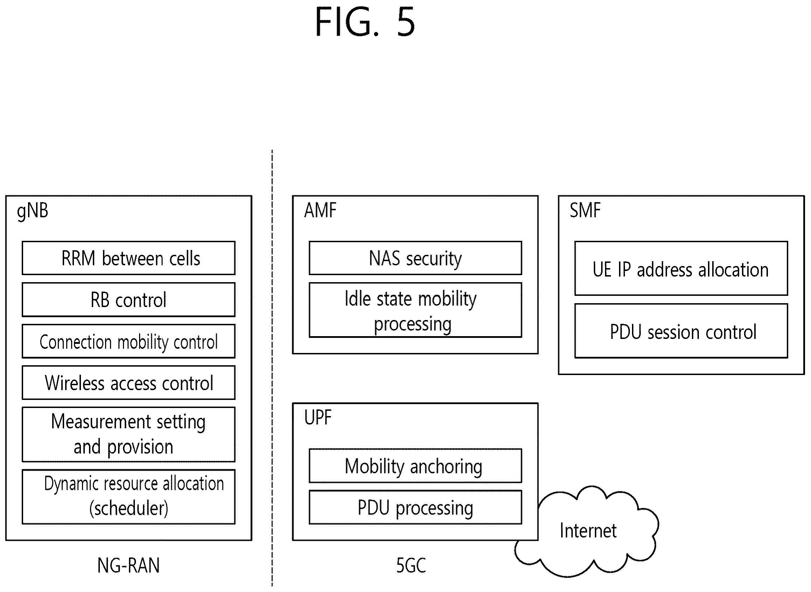

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

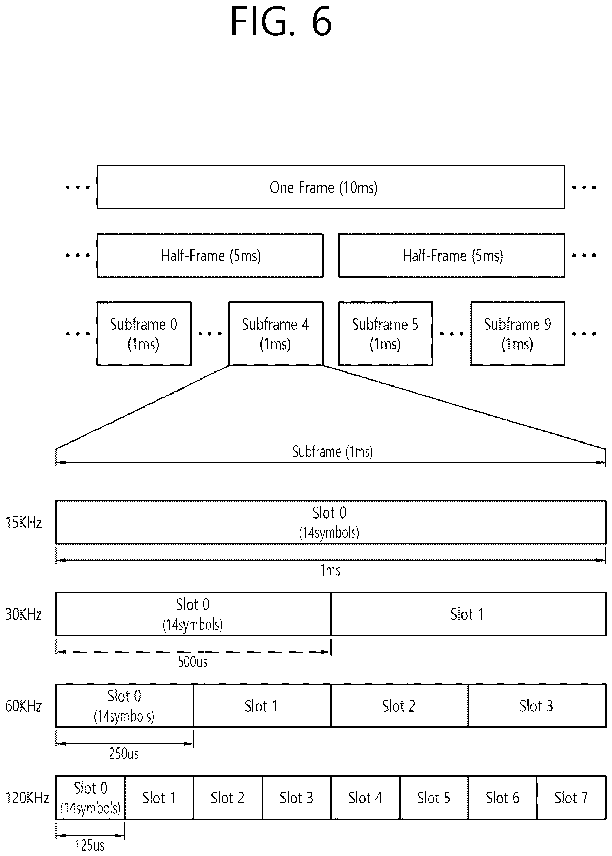

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration µ.

**[Table 1]**

| µ | Δf = 2^{µ}·15[kHz] | Cyclic prefix (CP) |
|---|---|---|
| 0 | 15 | Normal |
| 1 | 30 | Normal |
| 2 | 60 | Normal |
| | | Extended |
| 3 | 120 | Normal |
| 4 | 240 | Normal |

The following table 2 illustrates the number of slots in a frame (N^{frame,µ}ₛₗₒₜ), the number of slots in a subframe (N^{subframe,µ}ₛₗₒₜ), the number of symbols in a slot (N^{slot}_{symb}), and the like, according to subcarrier spacing configurations µ.

**[Table 2]**

| µ | N^{slot}_{symb} | N^{frame,µ}ₛₗₒₜ | N^{subframe,µ}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of µ=0, 1, 2, 3.

Table 2-1 below illustrates that the number of symbols per slot, the number of slots per frame, and the number of slots per subframe vary depending on the SCS, in case of using an extended CP.

**[Table 2-1]**

| SCS(15*2^{µ}) | N^{slot}_{symb} | N^{frame, µ}ₛₗₒₜ | N^{subframe, µ}ₛₗₒₜ |
|---|---|---|---|
| 60KHz (µ=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

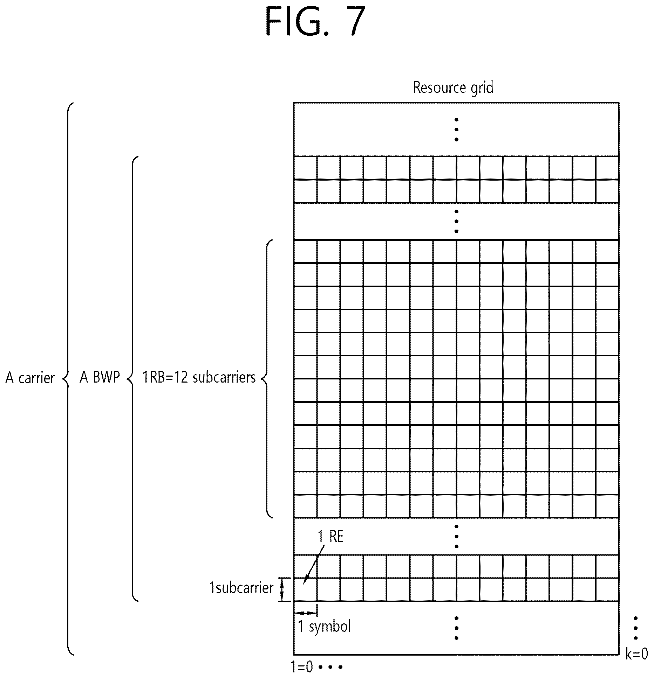

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

**[Table 3]**

| **Aggregation level** | **Number of CCEs** |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

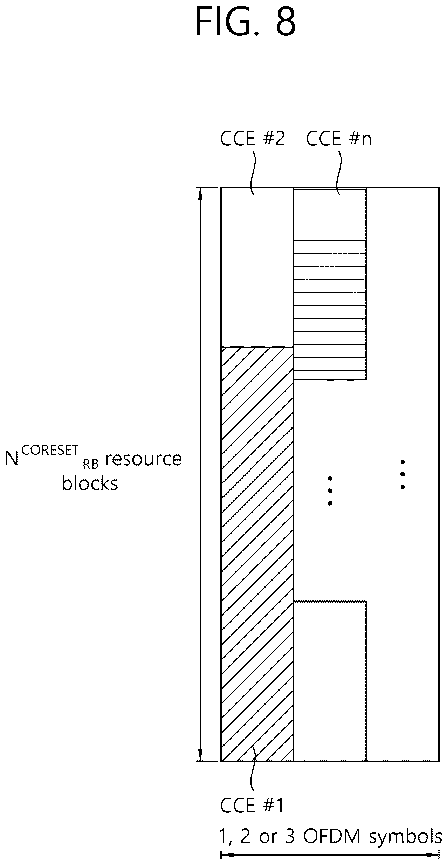

FIG. 8 illustrates CORESET.

Referring to FIG. 8, the CORESET includes N^{CORESET}_{RB} number of resource blocks in the frequency domain, and N^{CORESET}_{symb} ∈ {1, 2, 3} number of symbols in the time domain. N^{CORESET}_{RB} and N^{CORESET}_{symb} may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system band used by a base station (BS). All the UEs, excluding some (e.g., eMTC/NB-IoT UE) supporting only a narrow band, shall be able to receive wireless signals of the entire system band of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system band.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

### <Self-contained subframe structure>

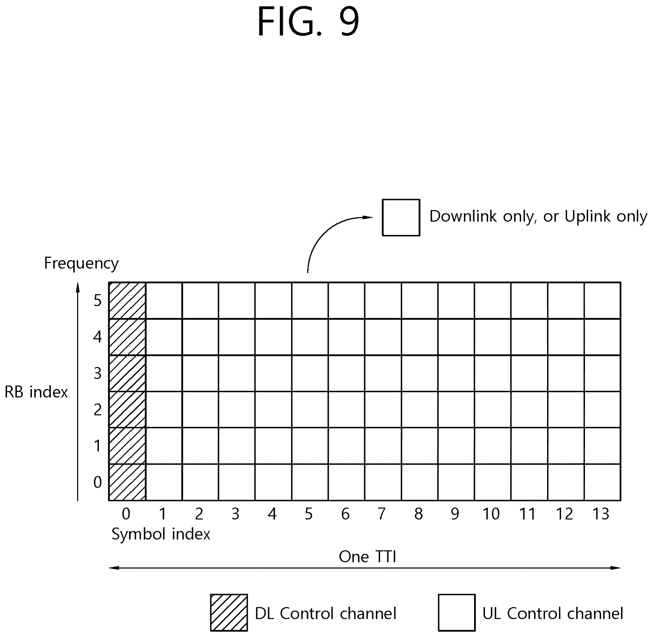

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

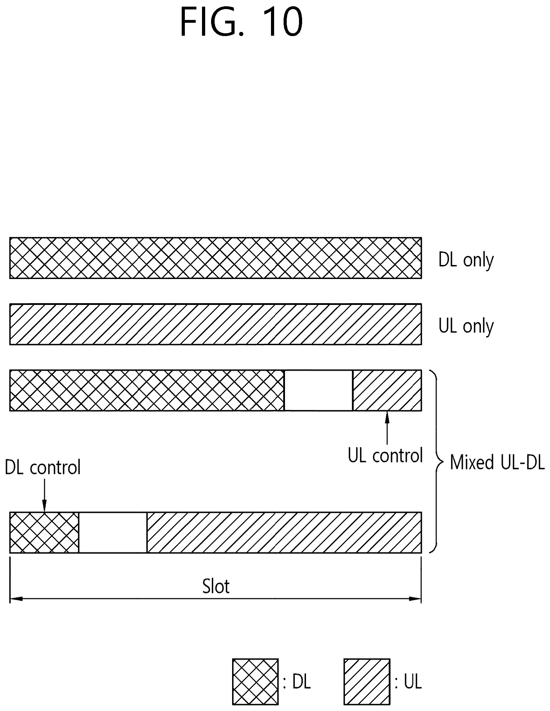

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.
1. DL only configuration,
2. UL only configuration,
3. Mixed UL-DL configuration:
   DL region + Guard period (GP) + UL control region,
   DL control region + GP + UL region.
   DL region: (i) DL data region, (ii) DL control region + DL data region.
   UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

### <Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

### <Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH associated with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.
1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

**[Table 4]**

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.
1) search space set index s (0≤s<40), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

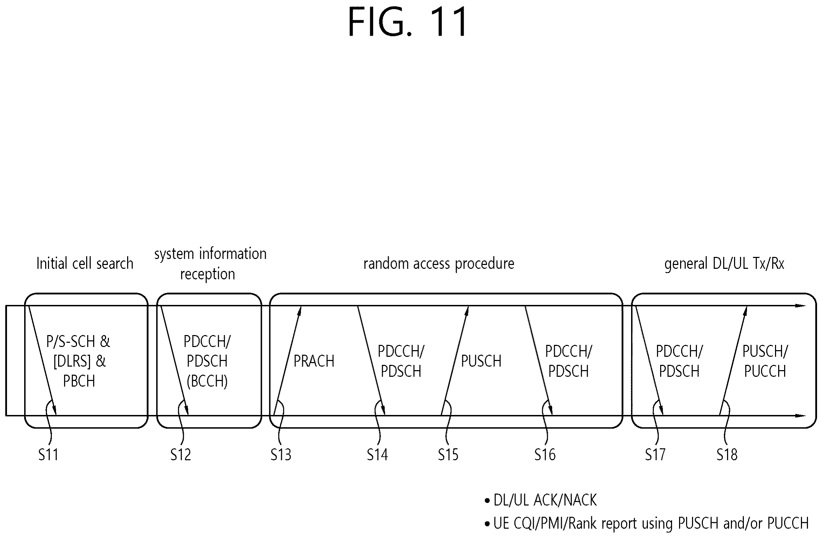

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.
- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

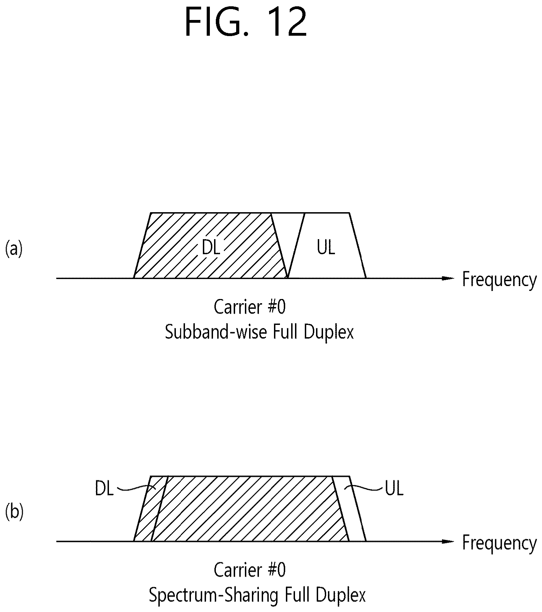

FIG. 12 shows examples of how to apply full duplex within an intra-carrier.

Referring to FIG. 12, the full duplex method includes subband-wise full duplex (hereinafter referred to as subband full duplex or SBFD) as shown in (a) of FIG. 12 and spectrum sharing full duplex (hereinafter referred to as SSFD as shown in (b) of FIG. 12 may be considered.

In the case of SB-FD, DL and UL are transmitted and received through different frequency resources within the same carrier (e.g., carrier #0). That is, different frequency resources are used in DL and UL for the same time resource.

In the case of SS-FD, DL and UL are transmitted and received through the same or overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SB-FD or SS-FD operations can be performed on time resources that perform full duplex operations.

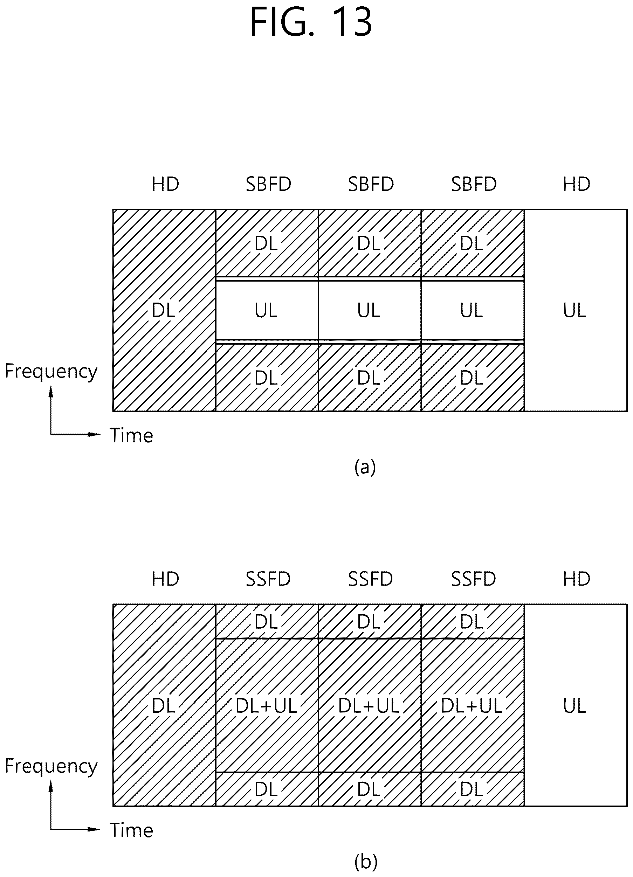

FIG. 13 shows an example in which a time resource operating in half duplex (HD) and a time resource operating in full duplex (FD) such as SB-FD or SS-FD exist together.

In (a) of FIG. 13, some time resources operating as SB-FD (=SBFD) are indicated as SBFD, and time resources operating as HD are indicated as HD. In (b) of FIG. 13, some time resources operating as SS-FD (=SSFD) are indicated as SSFD, and time resources operating as HD are indicated as HD. The unit of time resource may be, for example, a slot or symbol.

In time resources operating as SB-FD, some frequency resources are used as DL resources, and other frequency resources are used as UL resources. Between the DL frequency resource and the UL frequency resource, there may be a guard sub-band that is unused and empty for both DL and UL. Guard subbands may also be referred to by other terms, such as guard frequency resources or guard subcarrier(s).

In time resources operating with SS-FD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operate as HD is referred to as a HD slot, and a slot resource that operate as SB-FD and a slot resource that operate as SS-FD are referred to as a SB-FD slot and a SS-FD slot, respectively. The SS-FD slot and the SS-FD slot are also collectively referred to as FD slots.

In the present disclosure, in time resources operating in FD, among all frequency resources, frequency resources operating in DL are referred to as a DL subband, and frequency resources operating in UL are also referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

Based on the above discussion, this disclosure proposes a method for a UE to be configured and determine the time resource in which the SBFD symbol is located in intra-carrier full duplex operation.

In the following, the term network may be interpreted as gNB or CU/DU. The term UE(terminal) may also be interpreted as a mobile terminal (MT) of an IAB node or a MT of a network-controlled repeater (NCR-MT).

### A. Characteristics of DL/UL time/frequency resources for SB-FD and SS-FD operation

A cell (base station) can perform both DL transmission and UL reception in the same time resource in an FD scheme such as SB-FD or SS-FD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system band of the cell, and performs UL operations through all or part of the frequency resources (second frequency resources).

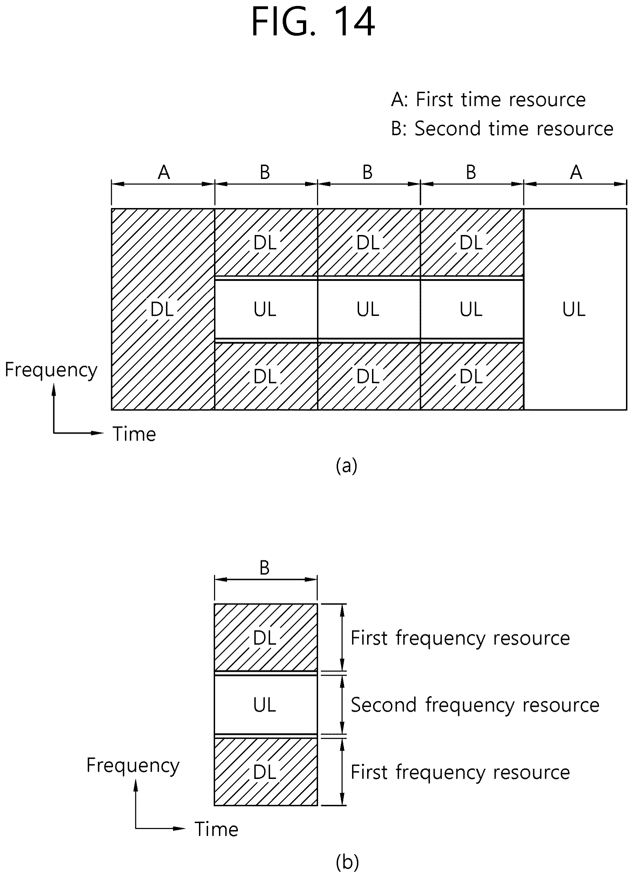

FIG. 14 shows examples of a first time resource, a second time resource, a first frequency resource, and a second frequency resource.

Referring to (a) of FIG. 14, in the first time resource (represented by A), the device operates in HD. In the second time resource (represented by B), for example, the device can operate as SB-FD. In the first time resource, the resource indicated by DL corresponds to the above-described 1-1 time resource, and the resource indicated by UL corresponds to the above-described 1-2 time resource.

Referring to (b) of FIG. 14, in the second time resource, the frequency resource operating as DL corresponds to the above-described first frequency resource, and the frequency resource operating as UL corresponds to the above-described second frequency resource.

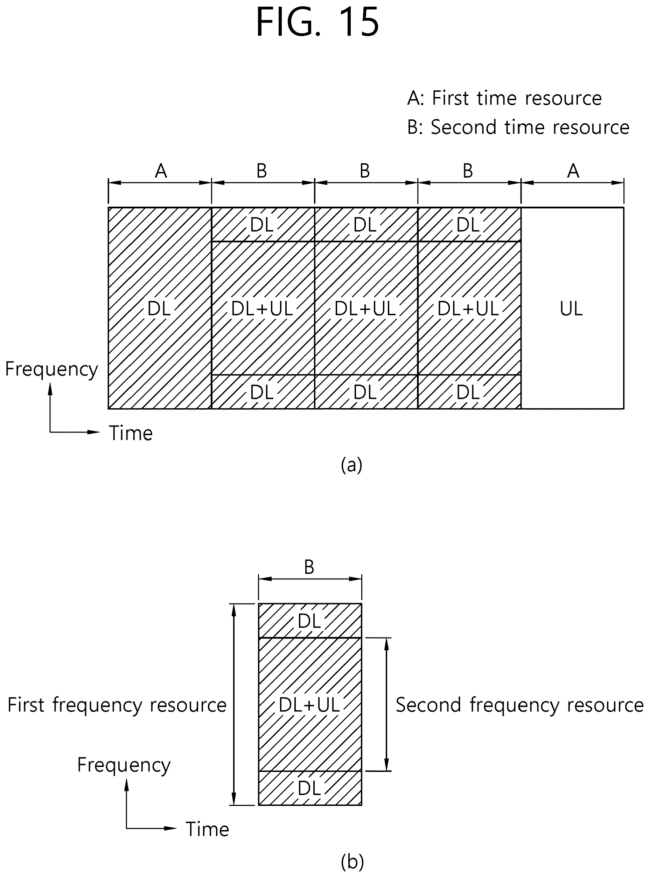

FIG. 15 shows another example of a first time resource, a second time resource, a first frequency resource, and a second frequency resource.

Referring to (a) of FIG. 15, in the first time resource (denoted by A), the device operates as a half-duplex. In the second time resource (labelled B), the device may operate, for example, as an SSFD. In the first time resource, the resource denoted DL corresponds to the first time resource described above, and the resource denoted UL corresponds to the second time resource described above.

Referring to (b) of FIG. 15, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.
1) When performing SB-FD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.
2) When performing SS-FD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.
3) When performing an SB-FD operation, the second frequency resource may be composed of contiguous frequency resources, and the first frequency resource may be composed of non-contiguous frequency resources. In this case, the first frequency resource may comprise a plurality of discontiguous sets (e.g., two), each of which may comprise a contiguous frequency resource. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. In this case, the second frequency resource may comprise a plurality of discontiguous sets (e.g., two), each of which may comprise a contiguous frequency resource. This is to reduce interference from DL transmission on UL resources in adjacent carriers by placing the second frequency resource used for DL at the center of the frequency resources constituting the cell.
4) When performing SS-FD operation, the second frequency resource may be composed of some frequency resources of the first frequency resource. At this time, the second frequency resource may be configured to have fewer X physical resource blocks (PRBs) on one or both edges of the carrier than the first frequency resource. This is to reduce interference from DL transmission on adjacent carriers to UL reception.

The network determines the 'first time resource' and 'second time resource', and the 'first frequency resource' and 'second frequency resource' as described above, and provides all or part of the corresponding information to the UE.

For the FD (SBFD and/or SSFD) operation of the cell, the UE may determine information about the time resources (hereinafter referred to as SBFD symbols) that operate as SBFD (and/or SSFD). For this purpose, information about the SBFD symbol may be set to the UE from the network.

When a specific time resource is set as a time resource operating in SBFD (SBFD symbol), both DL and UL resources may exist in that time resource. In this case, if there is no UL signal for the base station to receive in that time resource, the base station can only perform DL transmissions. In SBFD resources, DL transmission is only within the DL subband. Therefore, even if there is no UL signal transmitted in the UL subband, DL transmission can only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbols, it can consider a fallback to TDD operation where DL or UL operation is performed over the full band, rather than SBFD operation over DL/UL subbands.

The UE can perform the same TDD operation (half duplex operation) as an existing UE in resources that are not determined to be SBFD symbols. That is, only DL or UL operations can be performed using all frequency resources of the cell.

In the present disclosure, a time resource operating as SBFD or an SBFD symbol may mean a 'second time resource'. Additionally, in this disclosure, a time resource operating in TDD, a time resource operating in HD, a TDD symbol, or an HD symbol may mean a 'first time resource'.

The DL subband referred to in this disclosure may mean the 'first frequency resource'. Additionally, the UL subband mentioned in this disclosure may mean the 'second frequency resource'.

This disclosure assumes SBFD operation where a cell performs DL and UL simultaneously using different frequency resources (e.g., subbands) in the same time resource. However, the content of this disclosure may also be applicable when the cell performs SS-FD operation.

This disclosure may include the following UE operations.

When the UE performs DL reception in an SBFD symbol, i) the UE may perform DL reception using frequency resources within the DL subband. The UE can perform DL reception using frequency resources within the DL subband within the DL BWP. ii) The UE does not perform DL reception on frequency resources outside the DL subband. The UE does not perform DL reception using frequency resources outside the DL subband within the DL BWP.

If the UE performs UL transmission on SBFD symbols, i) the UE may use frequency resources within the UL subband to perform UL transmission. The UE may use frequency resources within the UL subband to perform UL transmission within the UL BWP. ii) The UE does not perform UL transmission on frequency resources other than the UL subband. The UE does not perform UL transmission using frequency resources other than the UL subband within the UL BWP.

In general, the UE can perform DL reception within the DL subband and UL transmission within the UL subband in time resources for which the cell is determined to operate in SBFD. However, in the case where the gNB (base station) only performs DL transmission or UL reception in the time resources for which the cell is determined to operate as SBFD, or, if necessary, performs DL transmission or UL reception through the entire band (can receive DL or UL scheduling) can be considered.

Additionally/independently, this disclosure proposes a method in which the UE receives location information of the SBFD symbol from the network, and based on/independently determines the location of the SBFD symbol.

The UE receives from the network, via tdd-UL-DL-ConfigurationCommon, slot configuration information, which is DL and UL symbol information for a plurality of slot resources. That is, the slot configuration information may be information informing whether a symbol in a slot is a DL symbol or a UL symbol. For example, the slot configuration information may indicate at least one of the following: the number of downlink slots, the number of downlink symbols among the symbols in the slot (e.g., from the beginning of the slot), the number of uplink slots, and the number of uplink symbols (e.g., from the end of the slot).

Symbols set to DL via tdd-UL-DL-ConfigurationCommon (or tdd-UL-DL-ConfigCommon) can be referred to as cell-specific DL symbols and symbols set to UL can be referred to as cell-specific UL symbols. Also, symbols that are not set to DL or UL via tdd-UL-DL-ConfigurationCommon (or tdd-UL-DL-ConfigCommon) can be referred to as cell-specific F (flexible) symbols.

For example, the UE can be configured with pattern1 via tdd-UL-DL-ConfigCommon, or pattern 1 and pattern2, as shown below. pattern1 contains slot configuration information for the P msec time duration. pattern2 contains the slot configuration information for the P2 msec time duration.

If the device is set to pattern1 only, the slot configuration period is equal to P. If the UE is set to pattern1 and pattern2, pattern1 and pattern2 are applied repeatedly, and the slot configuration period is equal to P+P2 msec.

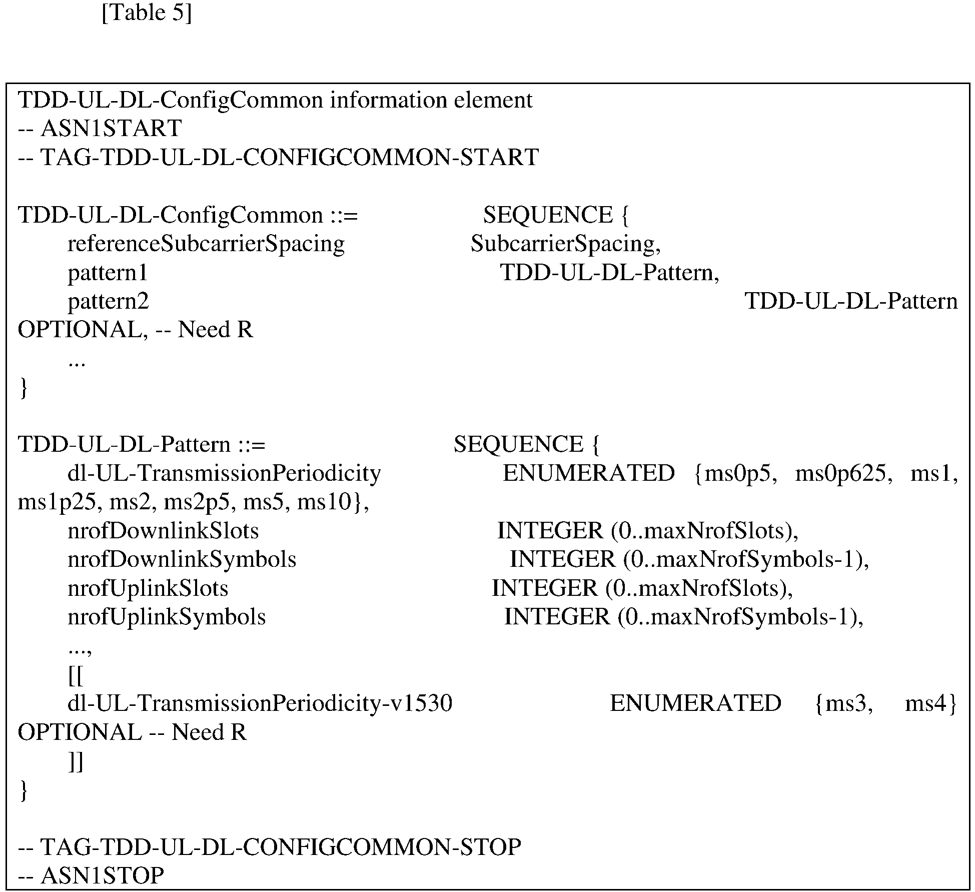

### <Symbol level SBFD resource indication>

The UE may be configured with consecutive symbols among the symbols of pattern1 and/or pattern2 as FD resources (e.g., SBFD symbol resources) from the network.

If the UE is configured with only pattern1, consecutive symbols within the P msec time duration indicated by pattern1 can be configured as SBFD symbol resources.

More specifically, consecutive symbols within symbols determined to be cell-specific DL and/or cell-specific F within the time duration of P msec may be set as SBFD symbol resources.

If the UE is configured with both pattern1 and pattern2, it can be configured with information about consecutive symbol resources that are set as SBFD symbol resources within the P msec time duration indicated by pattern1. Additionally/independently, information about consecutive symbol resources that are set as SBFD symbol resources within the P2 msec time duration indicated by pattern2 can be set independently.

More specifically, information may be set about consecutive symbol resources that are set as SBFD symbol resources within symbols determined to be cell-specific DL and/or cell-specific F within the P msec time duration indicated by pattern1. Additionally/independently, information about consecutive symbol resources that are set as SBFD symbol resources within symbols determined to be cell-specific DL and/or cell-specific F within the P2 msec time duration indicated by pattern2 may be independently set.

Meanwhile, it is necessary to set the SBFD symbol resource so that SBFD operation is not performed on the time resource when a specific signal/channel is transmitted or received, for example, SS/PBCH.

That is, if the FD time resource is set repeatedly with a period of P+P2, and there is a collision with the SS/PBCH resource that is sent periodically (i.e., overlapping), this collision will occur repeatedly.

Therefore, it may be necessary to set SBFD symbol resources differently for each time duration. That is, when a P+P2 period is repeated, it may be necessary to set the SBFD symbol resources so that for each P+P2 period, an SBFD symbol can exist in a different resource. In this case, each SBFD symbol resource can be applied with an independent period and offset from each other.

The set SBFD symbol resource can be applied with a period of P+P2 msec or with a period of (P+P2)*N msec. If pattern2 is not set, P2 can be determined to be zero. In this case, when pattern1 and pattern2 are applied periodically with a period of P+P2 msec, the SBFD symbol resource may only exist for some time duration of P+P2 msec.

The following describes how a UE receives information from the network to determine the SBFD symbol resource and determines the SBFD symbol resource based on the information. First, an overview of these methods is described, and then specific examples are described in detail.

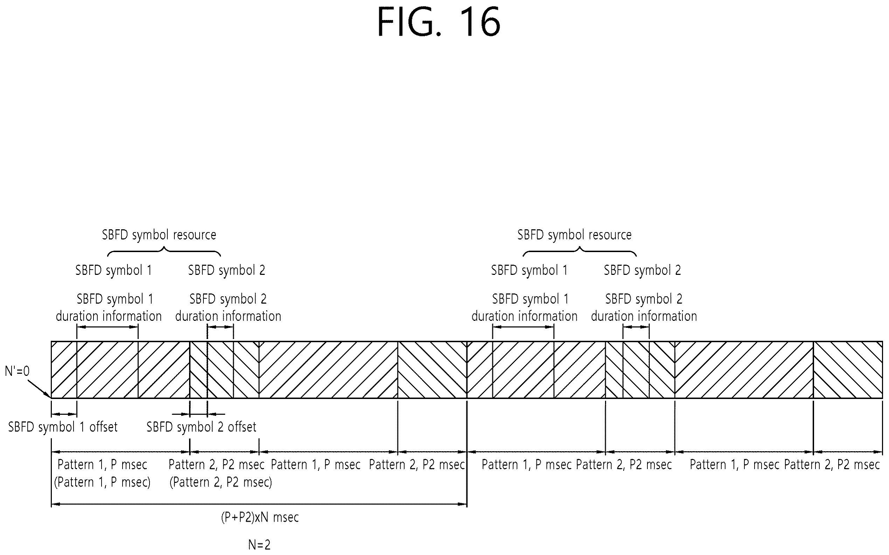

FIG. 16 illustrates a method of operating a UE in a wireless communication system.

Referring to FIG. 16, the UE receives (S161) time division duplex (TDD) configuration information from the base station including a first TDD periodicity of the first downlink-uplink pattern (hereinafter referred to as pattern1) and a second TDD periodicity of the second downlink-uplink pattern (hereinafter referred to as pattern2). The TDD configuration information may be, for example, the TDD-UL-DL-ConfigCommon IE described in Table 5.

Here, the first downlink-uplink pattern informs the downlink symbol and uplink symbol for the slot resource within the first TDD period. The second downlink-uplink pattern informs the downlink symbol and uplink symbol for the slot resource within the second TDD period.

The UE receives full duplex (FD) time resource information from the base station (S162). The FD time resource information may include at least one of an FD period, an FD period offset, a first FD resource offset, a first FD resource duration, a second FD resource offset, and a second FD resource duration.

When the first TDD period is called P and the second TDD period is called P2, the period of the FD time resources may be (P+P2)*N, wherein the FD period is informed by N (N is a natural number).

The (P+P2)*N can be viewed as including N (P+P2) periods. That is, one period is (P+P2) and N such periods are repeated. In this case, if the FD time resource is located in the N'th (P+P2) period among the N (P+P2) periods, the FD period offset indicates the N'th (P+P2) period. wherein N' is any one of 0, 1, ..., N-1.

The FD period offset may be provided as a plurality of values. According to an embodiment, the FD period offset may be provided as a bitmap comprising N bits, each of the N bits corresponding to each of the N (P+P2) periods. A value of 1 for each bit may indicate that an FD time resource is present in the corresponding (P+P2) period. For example, if N=4 and the bitmap is given as '0101', it indicates that FD time resources are present in the second (P+P2) period, fourth (P+P2) period among the four (P+P2) periods.

The first FD resource offset informs the starting location of the FD time resource within the first TDD period, and the first FD resource duration informs the duration of the FD time resource based on the starting location.

The second FD resource offset informs the starting location of the FD time resource within the second TDD period, and the second FD resource duration informs the duration of the FD time resource based on the starting location.

Depending on the embodiment, the FD time resource information may further include TDD pattern information. The TDD pattern information may be information indicating where the FD time resource is located among the first downlink-uplink pattern and the second downlink-uplink pattern.

The UE performs communication with the base station based on the the TDD configuration information and the the FD time resource information. The FD time resources set by the above FD time resource information are located only in some time resources of certain periods different from the first TDD period and the second TDD period among the first TDD time resources of the first TDD period and the second TDD time resources of the second TDD period (S163).

Now, a specific example of the method described in FIG. 16 will be described. The method described in FIG. 16 may be performed by Method 1 or Method 2, or a combination of Method 1 and Method 2, as described below.

### Method 1.

The SBFD symbol resource (i.e., FD time resource) consists of a consecutive symbol resource that exists within the duration of pattern1 (let's call it SBFD symbol 1, i.e., SBFD symbol 1 may consist of one or more consecutive symbols) and a consecutive symbol resource that exists within the duration of pattern2 (let's call it SBFD symbol 2, i.e., SBFD symbol 2 may consist of one or more consecutive symbols).

That is, in the present disclosure, the SBFD symbol resource may consist of SBFD symbol 1 and SBFD symbol 2. If the UE has only pattern1 set, the SBFD symbol resource may consist of only SBFD symbol 1.

The SBFD symbol resource is configured (exists) with a period of (P+P2)*N msec (milliseconds) (N: natural number) (i.e., the specific period, which is different from the first TDD period and the second TDD period). In this case, the SBFD symbol resource may be present in a specific one of the N (P+P2) msec durations (periods) within the (P+P2)*N msec duration (period). If the UE is set to pattern1 only, P2 may be determined to be zero.

For this purpose, the UE may be configured with information for determining the "SBFD symbol resource" (hereinafter referred to as "SBFD symbol configuration information", i.e., the FD time resource information of FIG. 16) from the network. Such SBFD symbol configuration information (i.e., FD time resource information) may include all or part of the following information.

### 1) Period (Periodicity, an example of the FD period in FIG. 16)

The value of N can be set for period information. In this case, the UE may determine that the period is equal to (P+P2)*N msec. At this time, N may be an integer equal to or greater than 1.

Or, when the period is equal to (P+P2)*N, the value corresponding to (P+P2)*N can be set directly. That is, the FD period in FIG. 16 may be provided as a value of N, or may be provided as a value of (P+P2)*N.

### 2) Offset (offset, an example of FD period offset in FIG. 16)

An offset value can be set to determine the time location where the SBFD symbol resource exists within the period.

The value of N' can be set for offset information. In this case, the UE may determine that the offset value is equal to (P+P2)*N' msec. At this time, N' can have the values 0, 1, ..., N-1.

Alternatively, when the offset is equal to (P+P2)*N' msec, the value corresponding to (P+P2)*N' can be set directly. That is, the FD period offset in FIG. 16 may be provided as a value of N', or may be provided as a value of (P+P2)*N'.

### 3) SBFD symbol 1

Information about the resources of the SBFD symbol that exists within the pattern1 duration can be set. For this purpose, for example, the following information can be set.
i) SBFD symbol 1 offset (an example of the first FD resource offset in FIG. 16): refers to the offset value between the first symbol to which pattern1 is applied and the starting symbol location where SBFD symbol 1 starts. At this time, this offset value may have units of slots or symbols.
ii) SBFD symbol 1 duration (an example of the first FD resource duration in FIG. 16): Duration information of SBFD symbol 1 (e.g., indicating how many consecutive symbols/slots SBFD symbol 1 consists of). At this time, this duration value may have units of slots or symbols.

That is, SBFD symbol 1 can be defined/set/determined by the SBFD symbol 1 offset and the SBFD symbol 1 duration.

Or, for example, the following information can be set.

Transition point 1(or location, hereinafter the same) from non-SBFD symbol to SBFD symbol: Information about the transition point from a non-SBFD symbol to an SBFD symbol within the pattern1 duration, i.e., the location of the symbol at which SBFD symbol 1 (SBFD symbol 1 may comprise one or more consecutive symbols as described above) begins. More specifically, the location information may be set to indicate the location of the symbol at which the SBFD symbol 1 begins relative to the first symbol to which the pattern 1 is applied.

Transition point 1 (or location, hereinafter the same) from SBFD symbol to non-SBFD symbol: Information about the transition from SBFD symbol to non-SBFD symbol within the pattern1 duration, i.e., the location of the symbol at which SBFD symbol 1 ends or the location of the next symbol after the last symbol that makes up SBFD symbol 1, is set. More specifically, relative to the first symbol to which pattern1 is applied, the location of the symbol at which SBFD symbol 1 terminates or the location of the next symbol after the last symbol comprising SBFD symbol 1 is set.

### 4) SBFD symbol 2

Information about the resources of the SBFD symbol that exists within the pattern2 duration can be set. For this purpose, for example, the following information can be set.
i) SBFD symbol 2 offset (one example of the second FD resource offset in FIG. 16): refers to an offset value between the starting symbol location where SBFD symbol 2 starts from the first symbol to which pattern2 is applied. This offset value may be in units of slots or symbols.
ii) SBFD symbol 2 duration (an example of the second FD resource duration in FIG. 16): refers to the duration information of the SBFD symbol 2 resource (e.g., it may indicate how many consecutive symbols/slots the SBFD symbol 2 consists of). Such a duration value may have a unit of slots or symbols.

That is, SBFD symbol 2 can be defined/set/determined based on the SBFD symbol 2 offset and the SBFD symbol 2 duration.

Or, for example, the following information can be set.

Transition point 2 (or location, hereinafter the same) from non-SBFD symbol to SBFD symbol: Information about the transition point from a non-SBFD symbol to an SBFD symbol within the pattern2 duration, i.e., the location of the symbol at which SBFD symbol 2 (SBFD symbol 2 may comprise one or more consecutive symbols as described above) begins. More specifically, the location information may be set to indicate the location of the symbol at which the SBFD symbol 2 begins relative to the first symbol to which the pattern 2 is applied.

Transition point 2 (or location, hereafter the same) from SBFD symbol to non-SBFD symbol: Information about the transition from SBFD symbol to non-SBFD symbol within a pattern2 duration is set, i.e., the location of the symbol where SBFD symbol 2 ends or the location of the next symbol after the last symbol that makes up SBFD symbol 2. More specifically, the location of the symbol at which SBFD symbol 2 ends relative to the first symbol to which pattern2 is applied or the location of the symbol following the last symbol that makes up SBFD symbol 2 is set.

When the SBFD symbol configuration information as described above is provided to the UE from the base station, the UE may determine the SBFD symbol resource as follows.
1) The UE may determine that the SBFD symbol resource exists in a period of (P+P2)*N msec. In this case, within each (P+P2)*N msec duration, the UE determines that the SBFD symbol resource exists within a time duration of (P+P2)*N'msec to (P+P2)*(N'+1) msec relative to the start of each period.
   Alternatively, the UE may determine that the SBFD symbol resource exists within the resources of pattern1 and pattern2, which are the N'th resources within the duration of each period.
2) The UE determines that a time resource equal to the SBFD symbol 1 duration consecutive from the SBFD symbol 1 offset location relative to the start of the time duration in which the SBFD symbol exists as determined in 1) above constitutes SBFD symbol 1. In other words, the UE may determine that a time resource equal to the number of consecutive SBFD symbol 1 duration from the SBFD symbol 1 offset location based on the location of (P+P2)*N' msec within each period constitutes SBFD symbol 1.

Alternatively, based on the starting location of the pattern1 duration where the SBFD symbol exists, as determined in 1) above, it may be determined that time resources equal to the continuous SBFD symbol 1 duration from the SBFD symbol 1 offset location constitute SBFD symbol 1.

Alternatively, if the UE is provided with the time of transition from non-SBFD symbol to SBFD symbol and/or the time of transition from SBFD symbol to non-SBFD symbol to determine the SBFD symbol location, the UE may determine that the time resource from the symbol corresponding to the time of transition point 1 from non-SBFD symbol to SBFD symbol to the symbol before the time of transition point 1 from SBFD symbol to non-SBFD symbol constitutes SBFD symbol 1. Furthermore, if the transition point 1 from SBFD symbol to non-SBFD symbol is not set, the UE may determine that the last symbol in the pattern1 duration in which the SBFD symbol is present is the last symbol that constitutes SBFD symbol 1.

3) Further, the UE may determine that the SBFD symbol 2 constitutes a time resource equal to consecutive SBFD symbol 2 duration from the SBFD symbol 2 offset location, based on a time location P msec after the start of the time duration in which the SBFD symbol is present determined as in 1) above. In other words, the UE may determine that a time resource equal to the number of consecutive SBFD symbol 2 durations from the SBFD symbol 2 offset location based on the location of (P+P2)*N' + P msec within each period constitutes SBFD symbol 2.

Alternatively, the UE may determine that the SBFD symbol 2 comprises a time resource equal to the number of consecutive SBFD symbol 2 durations from the SBFD symbol 2 offset location relative to the starting location of the pattern2 duration in which the SBFD symbol is present as determined in 1) above.

Alternatively, if the UE is provided with the time information of transition from non-SBFD symbol to SBFD symbol and/or the time information of transition from SBFD symbol to non-SBFD symbol to determine the SBFD symbol location, the UE may determine that the time resource from the symbol corresponding to the time of transition point 2 from non-SBFD symbol to SBFD symbol to the symbol before the time of transition point 2 from SBFD symbol to non-SBFD symbol constitutes SBFD symbol 2. Additionally, if the transition point 2 from SBFD symbol to non-SBFD symbol is not set, the UE may determine that the last symbol in the pattern2 duration in which the SBFD symbol is present is the last symbol that constitutes SBFD symbol 2.

The UE determines that SBFD symbol 1 and SBFD symbol 2 constitute an SBFD symbol resource. These SBFD symbol resources may be repeated in a period of (P+P2)*N.

FIG. 16 shows an example of the SBFD symbol resource configuration when N=2 (i.e., period = (P+P2)*2 msec) and N'=0 (i.e., offset = (P+P2)*0 = 0 msec).

Referring to FIG. 16, within each period (i.e., (P+P2)*2 msec), there are SBFD symbols 1 and SBFD symbol 2 within the N'th (N'=0, meaning first) duration of pattern1 and pattern2, respectively, and SBFD symbols 1 and SBFD symbol 2 constitute the SBFD symbol resource. SBFD symbol 1 may consist of one or more consecutive symbols (e.g., four consecutive symbols). SBFD symbol 2 may consist of one or more consecutive symbols (e.g., two consecutive symbols).

Depending on the embodiment, the SBFD symbol resource may include a plurality of SBFD symbol 1s and a plurality of SBFD symbol 2s. This means that multiple SBFD symbol 1 and SBFD symbol 2 can be set through one SBFD symbol configuration information.

For this purpose, multiple SBFD symbol 1s and multiple SBFD symbol 2s in the same SBFD symbol resource may have a common period (=FD period) and offset (=FD period offset) from each other.

In this case, one SBFD symbol configuration information includes one period (=FD period) and offset information (=FD period offset), and may include multiple SBFD symbol 1s (first FD resource offset and first FD resource duration) and SBFD symbol 2s (second FD resource offset and second FD resource duration). The UE determines that the same period (=FD period) and offset (=FD period offset) apply for multiple SBFD symbol 1s and SBFD symbol 2s.

Alternatively, multiple SBFD symbol 1s and multiple SBFD symbol 2s in the same SBFD symbol resource may have a common periodicity (=FD period) but independent offsets (=FD period offset). In this case, SBFD symbol 1 and SBFD symbol 2 are always set to pair, and SBFD symbol 1 and SBFD symbol 2 that are paired with each other can have the same offset (=FD period offset).

In this case, one SBFD symbol configuration information includes one period information (=FD period), and a plurality of pairs of {offset (=FD period offset), SBFD symbol 1, SBFD symbol 2} information may be set. The UE determines that the same period (=FD period) applies to the plurality of SBFD symbol 1s and SBFD symbol 2s. The UE also determines that the offset (=FD period offset) value indicated for the plurality of SBFD symbol 1s and SBFD symbol 2s together as a pair are applied.

Alternatively, each SBFD symbol may have an independent offset (=FD period offset), regardless of whether it is SBFD symbol 1 or SBFD symbol 2. In this case, one SBFD symbol configuration information includes one period information (=FD period), and a plurality of pairs of {offset (=FD period offset), SBFD symbol 1} and a plurality of pairs of {offset (=FD period offset), SBFD symbol 2} information may be set. The UE determines that the same period (=FD period) applies to the plurality of SBFD symbol 1s and SBFD symbol 2s. The UE further determines that, for the plurality of SBFD symbol 1s and SBFD symbol 2s, the pairwise indicated offset (=FD period offset) value is applied to each SBFD symbol.

Additionally, a plurality of offset information may be set for offset information (i.e., FD period offset).

For example, a plurality of N' values may be included in the offset information (=FD period offset). Alternatively, the offset information (=FD period offset) may comprise bitmap information consisting of N bits. If the nth bit is 1, it may mean that n is included in the offset.

In this case, the UE may determine that the SBFD symbol (SBFD symbol 1 and/or SBFD symbol 2) is applied in common to a plurality of offsets (=FD period offset), i.e., if the offset information (=FD period offset) contains M (<=N) offset values, the UE may determine that the SBFD symbol (SBFD symbol 1 and/or SBFD symbol 2) is applied based on each offset location within the period.

For example, when period (N) is equal to 4 and offset (N') = {0, 2}, the set SBFD symbol 1 and SBFD symbol 2 can be located relative to (P+P2)*0 msec and (P+P2)*2 msec within each period.

In this case, there may be multiple SBFD symbol resources. In this case, the SBFD symbol resources may have independent configuration information, i.e., the UE may be configured with one or multiple SBFD symbol resources from the network. To do this, the UE may receive independent configuration information for each SBFD symbol resource from the network.

### Method 2.

SBFD symbol resources consist of consecutive symbol resources within the pattern1 or pattern2 duration.

The SBFD symbol resource exists with a period (=FD period) of (P+P2)*N msec (N: natural number). In this case, the SBFD symbol resource may exist in a specific one of the N P+P2 msec durations within the (P+P2)*N msec duration. If the UE is set to pattern1 only, P2 can be determined to be 0.

To this end, the UE may be configured with information for determining the 'SBFD symbol resource' ('SBFD symbol configuration information', an example of the FD time resource information in FIG. 16) from the network. Such SBFD symbol configuration information may include all or part of the following information.

### 1) Period (=an example of the FD period in FIG. 16)

The value of N can be set for period information. In this case, the UE may determine that the period is equal to (P+P2)*N msec. At this time, N may be an integer equal to or greater than 1.

Or, when the period is equal to (P+P2)*N, the value corresponding to (P+P2)*N can be set directly.

### 2) Offset (=an example of FD period offset in FIG. 16)

An offset value can be set to determine the time location where the SBFD symbol resource exists within the period.

The value of N' can be set for offset information. In this case, the UE may determine that the offset value is equal to (P+P2)*N' msec. At this time, N' can have the values 0, 1, ..., N-1.

Alternatively, when the offset is equal to (P+P2)*N' msec, the value corresponding to (P+P2)*N' can be set directly.

### 3) TDD pattern (=an example of TDD pattern information described in FIG. 16)

This refers to information indicating the pattern in which SBFD symbol resources exist among pattern1 and pattern2.

### 4) SBFD symbol

Information about the SBFD symbols within the pattern duration where the resources of the SBFD symbols indicated by the above TDD pattern exist may be set. For example, the following information may be set. wherein the SBFD symbol comprises one or more consecutive symbols.
i) the SBFD symbol offset (= one example of the first FD resource offset or the second FD resource offset of FIG. 16): Refers to an offset value between the starting symbol location where the SBFD symbol starts from the first symbol where the pattern indicated by the TDD pattern exists. In this case, such an offset value may have a unit of slots or symbols.
ii) an SBFD symbol duration (= an example of the first FD resource duration or the second FD resource duration of FIG. 16): It refers to the duration of the SBFD symbol (i.e., how many consecutive symbols/slots the SBFD symbol consists of). At this time, this duration value may have units of slots or symbols.

That is, the SBFD symbol can be defined/set/determined based on the SBFD symbol offset and the SBFD symbol duration.

Or, for example, the following information can be set.

Transition point from non-SBFD symbol to SBFD symbol (or location, hereinafter the same): Information about the transition point from a non-SBFD symbol to an SBFD symbol within the pattern duration, i.e., the location of the symbol at which the SBFD symbol (which may consist of one or more consecutive symbols as described above) begins. More specifically, a location information, that indicates the symbol location at which the SBFD symbol starts relative to the first symbol in the pattern duration where the SBFD symbol resource exists, can be set.

Transition point from SBFD symbol to non-SBFD symbol (or location, hereafter the same): Information about the transition point from SBFD symbol to non-SBFD symbol within a pattern duration, i.e., the location of the symbol at which the SBFD symbol ends or the location of the next symbol after the last symbol that makes up the SBFD symbol. More specifically, the location information for the symbol at which the SBFD symbol terminates or the location information for the next symbol after the last symbol comprising the SBFD symbol is set relative to the first symbol in the pattern duration in which the SBFD symbol resource exists.

Upon receiving the SBFD symbol configuration information as described above, the UE may determine the SBFD symbol resource as follows.
1) The UE determines that the SBFD symbol resource exists with a period of (P+P2)*N msec.

At this time, if pattern1 is indicated by the TDD pattern, then: i) the UE may determine that the SBFD symbol resource exists within the time duration of (P+P2)*N' msec to (P+P2)*N'+P msec relative to the start of each period within the duration of each period. Or ii) the UE determines that the SBFD symbol resource exists within the pattern1 resource, which is the N'th resource within the duration of each period.

Alternatively, if pattern2 is dictated by the TDD pattern, then: i) the UE may determine that the SBFD symbol resource exists within a time duration of (P+P2)*N'+P msec to (P+P2)*(N'+1) msec relative to the start of each period within the duration of each period. Or ii) the UE determines that the SBFD symbol resource is present in the pattern2 resource, which is the N'th resource within the duration of each period.

2) Based on the starting point of the time duration in which the SBFD symbol exists, as determined in 1) above, the UE determines that time resources consisting of consecutive symbols as long as the SBFD symbol duration from the SBFD symbol offset location constitute the SBFD symbol resource. That is, if pattern1 is indicated by the TDD pattern, the UE determines that a contiguous time resource equal to the SBFD symbol duration from the SBFD symbol offset location based on the location of (P+P2)*N' msec within each period constitutes the SBFD symbol resource. Alternatively, if pattern2 is indicated by the TDD pattern, the UE determines that a contiguous time resource equal to the SBFD symbol duration from the SBFD symbol offset location based on the location of (P+P2)*N'+P msec within each period constitutes the SBFD symbol resource.

Alternatively, based on the starting location of the pattern duration in which the SBFD symbol exists as determined in 1) above, the UE determines that the SBFD symbol resource is a continuous time resource equal to the SBFD symbol duration from the SBFD symbol offset location.

Or, in order to determine the location of the SBFD symbol, when the UE is provided with information on the time of transition from a non-SBFD symbol to an SBFD symbol and/or the time of transition from an SBFD symbol to a non-SBFD symbol, the UE may determine that the time resource from the symbol corresponding to the transition point from the non-SBFD symbol to the SBFD symbol to the symbol before the transition point from the SBFD symbol to the non-SBFD symbol constitutes the SBFD symbol based on the starting location of the pattern duration in which the SBFD symbol exists as determined in 1) above. Additionally, if no transition point from SBFD symbol to non-SBFD symbol is configured, the UE may determine that the last symbol in the time duration during which the SBFD symbol exists is the last symbol that constitutes the SBFD symbol.

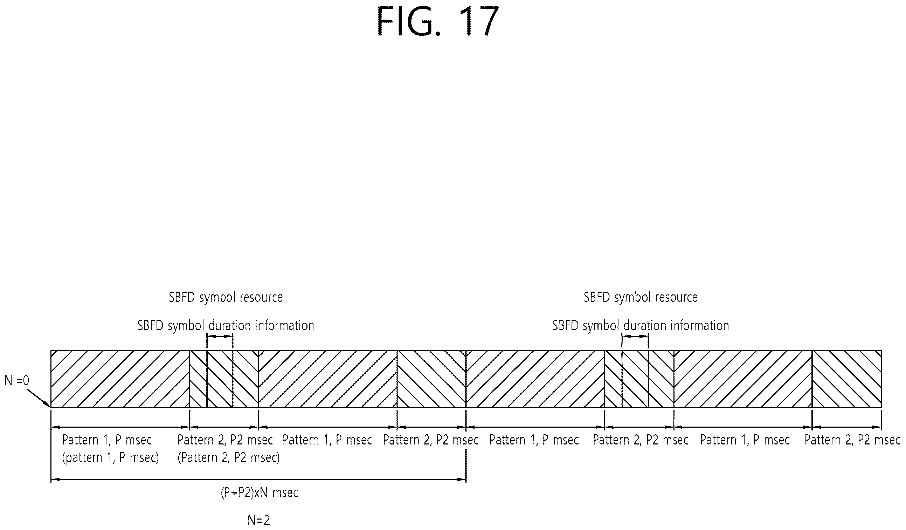

FIG. 17 shows an example of SBFD symbol resource configuration when N=2 (i.e., period = (P+P2)*2 msec), N'=0 (i.e., offset = (P+P2)*0 = 0 msec), and TDD pattern = pattern2.

Referring to FIG. 17, within each period ((P+P2)*2 msec), there are SBFD symbol resources within the duration of N'th (N'=0, meaning first) pattern2.

Depending on the embodiment, the SBFD symbol Resource may comprise multiple SBFD symbols, i.e., one SBFD symbol configuration information may set multiple SBFD symbols (i.e., multiple pairs of {SBFD symbol Offset, SBFD symbol Duration} may be set).

In this case, specifically, common period, offset, and/or TDD pattern information may be applied to a plurality of SBFD symbols included in the same SBFD symbol resource.

In this case, one SBFD symbol configuration information includes one period, offset, and/or TDD pattern information, and multiple SBFD symbol information may be set (i.e., multiple pairs of {SBFD symbol Offset, SBFD symbol Duration} can be set). The UE determines that the same period, offset, and/or TDD pattern information applies to a plurality of SBFD symbols.

Alternatively, a common period and offset are applied to a plurality of SBFD symbols included in the same SBFD symbol resource, but they may have independent TDD pattern information. In this case, one SBFD symbol configuration information includes one period and offset information, and a plurality of pairs of {TDD pattern information, SBFD symbol duration information} may be set. The UE determines that the same period and offset information applies to multiple SBFD symbols. On the other hand, for multiple SBFD symbols, the UE determines that the paired TDD pattern information is applied for each SBFD symbol.

Alternatively, multiple SBFD symbols in the same SBFD symbol resource may have a common period, but independent offset and TDD pattern information. In this case, one SBFD symbol configuration information includes one period information, and multiple pairs of {offset, TDD pattern information, SBFD symbol duration information} may be set. The UE determines that the same period applies to the plurality of SBFD symbols. The UE determines that the paired offset and TDD pattern information is applied to each of the plurality of SBFD symbols.

In addition, multiple offset information can be set for offset information (=FD period offset).

For example, the offset information may include a plurality of N' values. Alternatively, the offset information may consist of bitmap information consisting of N bits. If the nth bit is 1, it can mean that n is included in the offset.

In this case, the UE may determine that the SBFD symbols are determined by multiple offsets, i.e., if the offset information contains M (<=N) offset values, the UE may determine the SBFD symbol based on each offset location within the period.

For example, when period (N) is equal to 4, offset (N') = {0, 2}, and TDD pattern = pattern2, SBFD symbols can be located relative to (P+P2)*0 + P msec and (P+P2)*2 + P msec within each period.

In some embodiments, there may be multiple SBFD symbol Resources. In this case, the SBFD symbol Resources may have configuration information that is independent of each other, i.e., the UE may receive configuration information for one or more SBFD symbol Resources from the network. To do this, the UE may be configured with configuration information for each SBFD symbol Resource independently from the network.

Additionally/independently, if the period is not set through the SBFD symbol configuration information, i) the UE may determine that the period of the SBFD symbol configuration information is equal to P+P2 msec. In other words, it can be determined to be equal to N=1. Or ii) the UE may determine that the period of SBFD symbol configuration information is the same as the period in which SS/PBCH is transmitted in the corresponding cell.

This content can be applied not only to Method 1 and Method 2 for the SBFD symbol configuration information, but also to other methods.

### <Slot level SBFD resource indication>

Hereinafter, SBFD will be described as an example of an FD operation. However, the FD operation is not limited to this, and the SSFD operation can also be performed.

When SBFD symbols and non-SBFD symbols co-exist in a single slot, resource indication at the symbol level/unit may not be desirable considering the way of the signal/channel is transmitted/received and the complexity of the UE's operation.

In consideration of this, the UE can receive instructions on a slot-by-slot basis for time resources to operate as an SBFD from the base station. That is, the UE can be instructed to operate SBFD/non-SBFD by using slots as granularity (minimum unit).

In this case, the UE can determine on a slot-by-slot basis whether the slot operates in SBFD or non-SBFD mode.

Specifically, the UE can be instructed as to whether a slot is in SBFD/non-SBFD operation through at least one of the following methods.

Option 1. Slot-based SBFD/non-SBFD indication: The UE may receive an indication from the base station that a specific slot is operating in SBFD mode or non-SBFD mode. For example, for a plurality of slot resources, the UE may receive information indicating whether each slot is operating in SBFD mode or non-SBFD mode.

Option 2. Bitmap-based indication: The UE can receive a bitmap indicating which slots operate in SBFD mode and which slots operate in non-SBFD mode. For example, the UE may receive a bitmap indicating that the 1st and 5th slots operate in SBFD mode and the remaining slots operate in non-SBFD mode.

Option 3. Set of SBFD slot indices: The UE can receive a set of slot indices that indicate which slots are operating in SBFD mode. For example, the UE might receive a set containing slot #2 and slot #7 to know that those slots operate in SBFD mode.

Option 4. Starting slot and slot duration information: The UE can receive the starting slot and duration information of the SBFD operation. For example, the UE may receive an instruction that the SBFD operation starts at slot #10 and lasts for four slots. At this time, the starting slot may indicate slot #10, and the duration information may indicate 4 slots.

This information can be applied periodically.

### <DL/UL/Flexible specific SBFD/non-SBFD indication>

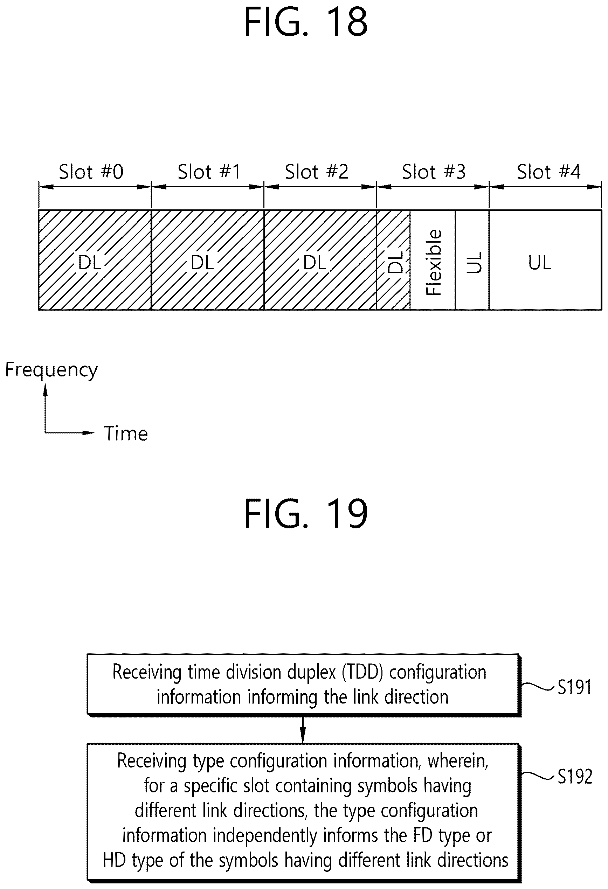

FIG. 18 illustrates the U/F/D direction type.

Referring to FIG. 18, each slot may include at least some of the following: downlink (DL) symbols, flexible symbols, and uplink (UL) symbols. For example, slots #0, 1, and 2 include DL symbols, slot #3 includes DL symbols, flexible symbols, and UL symbols, and slot #4 includes UL symbols.

Here, the DL, Flexible, and UL of a specific resource are referred to as its U/D direction type. A slot may consist of symbols with the same U/D direction type, such as slots #0, #1, #2, and #4. Alternatively, symbols with different U/D direction types may be present together, such as in slot #3. In this case, symbols with the same U/D direction type within the same slot have the same SBFD/non-SBFD type, but symbols with different U/D direction types within the same slot may have different SBFD/non-SBFD types.

To this end, the UE can be independently instructed as to SBFD/non-SBFD for each DL, flexible, and UL symbol within the slot. That is, the method of indicating whether the slot operates SBFD/non-SBFD can be independently applied to DL, flexible, and UL symbols.

The U/D direction type can be determined by TDD configuration information, for example, tdd-UL-DL-ConfigurationCommon and/or tdd-UL-DL-ConfigurationDedicated.

In this case, symbols with the same U/D direction type within the same slot have the same SBFD/non-SBFD type. If only symbols with the same U/D direction type exist in the same slot, all symbols in the slot have the same SBFD/non-SBFD type. However, symbols with different U/D direction types within the same slot may have different SBFD/non-SBFD types.

To do this, for example, the UE may be instructed to behave SBFD/non-SBFD as in options 1, 2, 3, and 4 above for DL, Flexible, and UL resources on a per-slot basis, independently of each other.

Meanwhile, the UE may not be instructed whether to use SBFD/non-SBFD for a UL symbol set as cell-specific, and may always determine that it operates as non-SBFD.

In this case, since no indication of SBFD/non-SBFD is required for UL resources, the UE can independently receive indication of SBFD/non-SBFD for each DL and flexible resource for each slot. That is, the base station can indicate whether the DL resource of each slot is SBFD/non-SBFD, and can indicate whether the flexible resource of each slot is SBFD/non-SBFD.

Applying the above method, for example, may result in different SBFD/non-SBFD types being applied for flexible symbols operated as UL within a specific slot and for symbols directed as UL by tdd-UL-DL-ConfigurationCommon and/or tdd-UL-DL-ConfigurationDedicated.

For this operation, the UE can be instructed whether to operate SBFD/non-SBFD, such as options 1, 2, 3, and 4, independently for DL and flexible resources for each slot for a plurality of slot resources. At this time, the UE may determine that UL resources are always operated as non-SBFD.

According to the standard (e.g., 3GPP TS 38.213), the slot configuration period P (msec) includes S=P·2^{µref} slots with SCS configuration µ_{ref}. If the U/D direction type is indicated via tdd-UL-DL-ConfigurationCommon, then within period P, i) the first dₛₗₒₜₛ slots (i.e. slot #0 to slot #dₛₗₒₜₛ -1) consist only of downlink symbols, and ii) the last uₛₗₒₜₛ slots (i.e. slot #P-uₛₗₒₜₛ to slot #P-1) consist only of uplink symbols. iii) For the next slot of the first dₛₗₒₜₛ slots (i.e., slot #dₛₗₒₜₛ), the d_{sym} symbols from the front are downlink symbols. iv) Starting from the back, for the previous slot of uₛₗₒₜₛ slots (i.e., slot #P-uₛₗₒₜₛ -1), the symbols in u_{sym} from the back are uplink symbols. The remaining (S - dₛₗₒₜₛ - uₛₗₒₜₛ)N^{slot}_{symb}-d_{sym}-u_{sym} symbols are flexible symbols.

Hereinafter, for convenience, the case where P slots are included in the slot configuration period P (i.e., µ_{ref} = 0) will be described as an example.

In this disclosure, SBFD/non-SBFD operation information may be indicated only for DL or flexible resources as follows.

### Method 1.

If SBFD/non-SBFD operation information is indicated for DL or flexible resources only, then SBFD/non-SBFD operation information is required to be indicated for P-uₛₗₒₜₛ of the P slots in Period P. In this case, for the first P-uₛₗₒₜₛ of slots in Period P, the UE may be instructed whether to behave SBFD/non-SBFD as in Options 1, 2, 3, or 4. The UE may determine that it always behaves as non-SBFD for UL resources.

In this case, an indication of one SBFD/non-SBFD operation information is applied on a slot basis. Therefore, when both DL resources and flexible resources are included in one slot, common SBFD/non-SBFD operation information is applied to both resources.

For example, if Option 2 (bitmap-based indication) above applies, information about whether P-uₛₗₒₜₛ of slots containing DL or flexible resources are SBFD-enabled or not may be indicated via a bitmap of length P-uₛₗₒₜₛ. For example, a slot that is SBFD enabled may be indicated by a 1 and a slot that is not may be indicated by a 0.

Alternatively, for example, if Option 4 (Starting slot and Slot Duration Information) above applies, the starting slot location and slot duration information that operates as an SBFD may be specified for consecutive slots of P-uₛₗₒₜₛ containing DL or flexible resources. The UE may determine that a resource that is not directed to an SBFD-operated slot is a non-SBFD-operated resource. In this case, the slot offset information relative to the first slot in the period may be indicated to indicate the starting slot location. In this case, the location of the starting slot can be any of slots #0 to #P-uₛₗₒₜₛ-1. The slot offset value may be directed within the range of 0 to P-uₛₗₒₜₛ-1. The slot duration value may also be specified within the range of 0 to 'P-uₛₗₒₜₛ' or within the range of 1 to 'P-uₛₗₒₜₛ'.

On the other hand, for flexible resources, the UE can be assumed to always operate in SBFD or it can be assumed to always operate in non-SBFD. In this case, the SBFD/non-SBFD operation can be specified for DL resources only. In this case, SBFD/non-SBFD operation information is required for dₛₗₒₜₛ+1 slots of the P slots in period P. In this case, the UE can be instructed whether to operate SBFD/non-SBFD as in options 1, 2, 3, and 4 for each slot for dₛₗₒₜₛ +1 slots from the beginning within period P. The UE may be determined to always behave as non-SBFD for UL resources. Additionally, the UE may determine that it always operates as non-SBFD for flexible resources. Alternatively, the UE may determine that it always operates as SBFD for flexible resources.

### Method 2.

If SBFD/non-SBFD operation information is specified for DL or flexible resources only, then SBFD/non-SBFD operation information needs to be specified for P-uₛₗₒₜₛ slots of P slots in period P. In this case, for the first P-uₛₗₒₜₛ within period P, the DL and flexible resources can be instructed to behave SBFD/non-SBFD as in options 1, 2, 3, and 4 above, independently. That is, in Method 1, the P-uₛₗₒₜₛ slots are instructed to behave SBFD/non-SBFD, whereas in Method 2, the P-uₛₗₒₜₛ slots are instructed to behave SBFD/non-SBFD independently for DL and flexible resources. The UE can always assume non-SBFD operation for UL resources.

For example, if Option 2 (bitmap-based instruction) above applies, for a P-uₛₗₒₜₛ slots containing DL or Flexible resources, information about whether SBFD is enabled for DL resources may be instructed via a first bitmap of P-uₛₗₒₜₛ length. For example, slots operating as SBFD may be indicated as 1, and slots that do not operate as SBFD may be indicated as 0.

Additionally/independently, for P-uₛₗₒₜₛ slots containing DL or flexible resources, information about whether the flexible resource is SBFD-enabled or disabled may be indicated via a second bitmap of length P-uₛₗₒₜₛ. For example, slots operating as SBFD may be indicated as 1, and slots that do not operate as SBFD may be indicated as 0.

Alternatively, for example, if Option 4 above (Starting slot and Slot Duration Information) applies, for consecutive P-uₛₗₒₜₛ slots containing a DL or Flexible Resource, a starting slot location and slot duration information that operates as an SBFD on the DL Resource may be indicated (this is referred to as the first starting slot location and slot duration information). The UE may determine that a resource that is not directed to a slot that operates in SBFD is a non-SBFD resource in the DL resource. In this case, the slot offset information relative to the first slot in the period may be indicated for indicating the starting slot location. In this case, the location of the starting slot may be one of slots #0 to #dₛₗₒₜₛ. The slot offset value may be directed within the range of 0 to dₛₗₒₜₛ. The slot duration value may be specified within the range of 0 to 'dₛₗₒₜₛ+1' or within the range of 1 to 'dₛₗₒₜₛ+1'.

Additionally/independently, for P-dₛₗₒₜₛ-uₛₗₒₜₛ consecutive slots comprising the flexible resource, a starting slot location and slot duration information (hereinafter referred to as second starting slot location and slot duration information) that operates as an SBFD on the flexible resource may be indicated. The UE may determine that a flexible resource that is not directed to an SBFD-operated slot is a non-SBFD-operated resource. In this case, the slot offset information relative to the first slot containing the flexible resource in the period (i.e., slot #dₛₗₒₜₛ) may be indicated to inform the starting slot location. In this case, the location of the starting slot can be one of slots #dₛₗₒₜₛ to #P-uₛₗₒₜₛ-1. For this purpose, the slot offset value indicated may be in the range 0 to 'P-dₛₗₒₜₛ-uₛₗₒₜₛ-1'. Also, the slot duration value may be directed within the range of 0 to 'P-dₛₗₒₜₛ-uₛₗₒₜₛ' or 1 to 'P-dₛₗₒₜₛ-uₛₗₒₜₛ'.

### Method 3.

The slots containing DL symbols and slots containing F symbols within a period P are equal to dₛₗₒₜₛ+1 and P-dₛₗₒₜₛ-uₛₗₒₜₛ, respectively.

Therefore, to indicate SBFD/non-SBFD operation for DL resources, the UE may be instructed whether SBFD/non-SBFD operation is to be performed as options 1, 2, 3 and 4 above on a per-slot basis for the dₛₗₒₜₛ+1 slots containing DL symbols. The UE may determine that these instructions mean SBFD/non-SBFD information for a slot #0 to a slot #dₛₗₒₜₛ within period P.

Additionally/independently, to indicate SBFD/non-SBFD operation for flexible resources, the UE may be instructed to indicate SBFD/non-SBFD operation as options 1, 2, 3 and 4 above on a slot-by-slot basis for the P-dₛₗₒₜₛ-uₛₗₒₜₛ slots containing flexible symbols. The UE may interpret these instructions to mean SBFD/non-SBFD information for slot #dₛₗₒₜₛ to slot #P-uₛₗₒₜₛ-1 within period P.

For example, if Option 2 (bitmap-based indication) above applies, information about whether SBFD is enabled or disabled for dₛₗₒₜₛ+1 slots containing DL resources may be indicated via a bitmap of length dₛₗₒₜₛ+1. Compared to Method 2, the length of the bitmap can be different. For example, slots operating as SBFD in DL resources may be indicated as 1, and slots that do not may be indicated as 0.

Additionally/independently, information on whether SBFD is operating for P-dₛₗₒₜₛ-uₛₗₒₜₛ slots including flexible resources can be indicated through a bitmap with a length of P-dₛₗₒₜₛ-uₛₗₒₜₛ. Compared to method 2, the length of the bitmap may be different. For example, slots that operate as SBFD in flexible resources may be indicated as 1, and slots that do not may be indicated as 0.

Or, for example, when option 4 (starting slot and slot duration information) is applied, for dₛₗₒₜₛ+1 consecutive slots including DL resources, the starting slot location and slot duration information can be indicated for slots operating as SBFD in DL resources. The UE may determine that a DL resource that is not directed to an SBFD-operated slot is a non-SBFD-operated resource. In this case, the slot offset information relative to the first slot in the period may be indicated to inform the starting slot location. In this case, the location of the starting slot can be one of slots #0 to #dₛₗₒₜₛ. The slot offset value may be specified within the range of 0 to dₛₗₒₜₛ. The slot duration value may be specified within the range of 0 to 'dₛₗₒₜₛ+1' or 1 to 'dₛₗₒₜₛ+1'.

Additionally/independently, for consecutive P-dₛₗₒₜₛ-uₛₗₒₜₛ slots comprising a flexible resource, the starting slot location and slot duration information for SBFD operation on the flexible resource may be indicated. The UE may determine that a resource that is not directed to an SBFD-enabled slot is a non-SBFD-enabled resource in the DL resource. In this case, slot offset information relative to the first slot containing flexible resources in the period (i.e., slot # dₛₗₒₜₛ) may be indicated to inform the starting slot location. In this case, the location of the starting slot can be one of slots #dₛₗₒₜₛ to #P-uₛₗₒₜₛ-1. The slot offset value may be specified in the range 0 to 'P-dsₗₒₜₛ- uₛₗₒₜₛ-1'. The slot duration value may also be specified within the range of 0 to 'P-dₛₗₒₜₛ-uₛₗₒₜₛ' or 1 to 'P-dₛₗₒₜₛ-uₛₗₒₜₛ'.

FIG. 19 illustrates a method of operating a UE in a wireless communication system.

Referring to FIG. 19, the UE receives time division duplex (TDD) configuration information informing the link direction (S191).

The TDD configuration information may be, for example, TDD-UL-DL-ConfigCommon described in Table 5. The UE can know the link direction (DL, UL, Flexible) for slots of a specific period and symbols within the slots through TDD configuration information.

The UE receives type configuration information, and for a specific slot containing symbols having different link directions, the type configuration information independently informs the FD type or HD type of the symbols having different link directions (S192).

Specifically, the type configuration information indicates the FD operation time resource information on a slot-by-slot basis. If the slot contains only symbols with the same link direction, the FD type or HD type is specified for the symbols, so that the slot operates only with the FD type or HD type, thus preventing transitions between FD and non-FD symbols within the slot.

On the other hand, if a specific slot contains symbols with different link directions, the type configuration information may set the FD type or HD type for the DL symbols contained in the specific slot, and set the FD type or HD type for the flexible symbols contained in the specific slot independently of the setting for the DL symbols. That is, for a specific slot containing symbols with different link directions, the type configuration information independently indicates either the FD type or the HD type for the symbols with different link directions.

The FD type above is a duplex type that can simultaneously perform uplink and downlink operations using different frequency bands within a slot, and the HD type above is a duplex type that can perform either uplink or downlink operations within a slot.

Depending on the embodiment, the type configuration information may, for a specific period comprising a plurality of slots, independently indicate the FD type or the HD type for the downlink symbols and flexible symbols of the remaining slots except for the slots having only uplink symbols. In this case, the UE may determine that the slots having only uplink symbols are of the HD type.

Depending on the embodiment, the type configuration information comprises a first bitmap comprising a number of bits equal to the number of the remaining slots, excluding slots having only the uplink symbols. The first bitmap may indicate either the FD type or the HD type for the downlink symbols contained in each of the remaining slots.

Depending on the embodiment, the type configuration information may comprise a second bitmap comprising a number of bits equal to the number of the remaining slots, excluding slots having only the uplink symbols, wherein the second bitmap may indicate either the FD type or the HD type for the flexible symbols contained in each of the remaining slots.

Depending on the embodiment, the type configuration information may include starting slot and slot duration information (first starting slot and slot duration information) in which a downlink symbol operates in the FD type among the remaining slots excluding slots having only the uplink symbols.

Depending on the embodiment, the starting slot may be indicated through an offset value for the first slot among the plurality of slots.

Depending on the embodiment, the type configuration information may include starting slot and slot duration information (second starting slot and slot duration information) in which a flexible symbol operates in the FD type among the remaining slots excluding slots having only the uplink symbols. At this time, the starting slot may be indicated through an offset value for the first slot including a flexible symbol among the plurality of slots.

These embodiments have been described in detail in Method 2 of <DL/UL/Flexible specific SBFD/non-SBFD indication>.

Depending on the embodiment, for a specific period comprising a plurality of slots, the the type configuration information may indicate the the FD type or the the HD type independently on a slot-by-slot basis for downlink slots comprising only downlink symbols and for flexible slots comprising flexible symbols.

Depending on the embodiment, the type configuration information comprises a third bitmap comprising a number of bits equal to the number of the downlink slots, wherein the third bitmap may indicate, for each of the downlink slots, either the FD type or the HD type on a slot-by-slot basis.

Depending on the embodiment, the type configuration information comprises a fourth bitmap comprising a number of bits equal to the number of the flexible slots, wherein the fourth bitmap may indicate, on a slot-by-slot basis, either the FD type or the HD type for the flexible symbols contained in each of the flexible slots.

Depending on the embodiment, the type configuration information may comprise a starting slot and slot duration information at which, among the downlink slots, the downlink symbol operates as the FD type. In this case, the starting slot may be indicated via an offset value relative to a first slot of the plurality of slots.

Depending on the embodiment, the type configuration information may comprise a starting slot and slot duration information in which the flexible symbol operates as the FD type in the plurality of flexible slots. In this case, the starting slot may be indicated via an offset value relative to a first slot comprising the flexible symbol among the plurality of slots.

These embodiments have been described in detail in Method 3 of <DL/UL/Flexible specific SBFD/non-SBFD indication>.

According to the method described in FIG. 19, the FD operation time resource information can be instructed on a slot-by-slot basis to avoid unnecessary transitions between FD and non-FD symbols within a slot, but when symbols with different link directions (downlink, flexible, uplink) are present together in a specific slot, the FD type and non-FD type can be instructed independently according to the link direction. This has the advantageous effect of increasing communication efficiency and avoiding unnecessary interference.

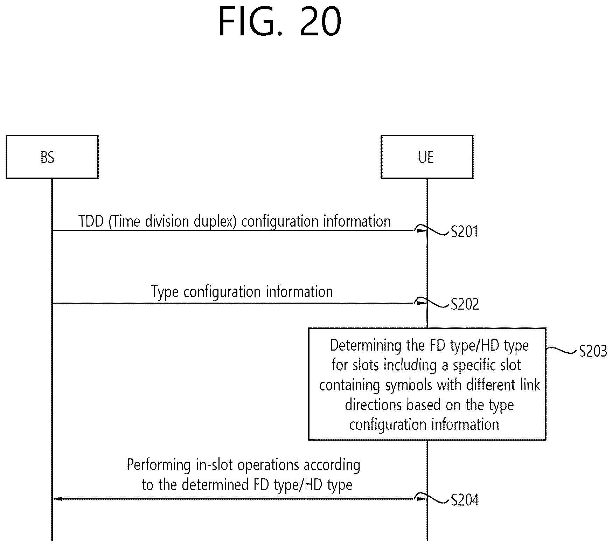

FIG. 20 illustrates signaling and operation methods between a base station and a UE.

The base station provides TDD configuration information to the UE (S201). TDD configuration information may be provided through, for example, a cell-specific system information/RRC message or a UE-specific RRC message.

The base station provides type configuration information to the UE (S202). The type configuration information may, for a specific slot comprising symbols having different link directions, independently indicate the FD type or the HD type for the symbols having different link directions.

The UE determines the FD type/HD type based on the type configuration information for a specific slot containing symbols with different link directions (S203).

The UE performs in-slot operations according to the determined FD type/HD type (S204).

### <Slot level SBFD/non-SBFD indication and symbol level SBFD/non-SBFD indication>

In the case of a symbol in which SSB is transmitted, the UE may determine that the corresponding symbol always operates as non-SBFD. In this case, for example, the UE is instructed to operate as SBFD for DL resources in a specific slot, and an SSB transmission symbol may be present in the specific slot. In this case, it can be determined that DL symbols that are SSB symbols in the specific slot operate as non-SBFD, and DL symbols that are not SSB symbols operate as SBFD.

Additionally/independently, in the case of a symbol for which PRACH can be transmitted (for example, in the case of a symbol for which a RACH occasion exists), the UE may determine that the corresponding symbol always operates as a non-SBFD. For example, if a UE is instructed to behave as SBFD for a flexible resource in a specific slot, and the slot also contains symbols to which PRACHs may be sent, it may determine that flexible symbols that are symbols to which PRACHs may be sent in that slot behave as non-SBFD and flexible symbols that are not behave as SBFD.

When the UE receives SBFD/non-SBFD operation information from the base station on a slot-by-slot basis, it may additionally/independently receive symbol-level SBFD/non-SBFD operation information.

If a UE is instructed to behave as SBFD for a specific slot, the UE may additionally be instructed SBFD and/or non-SBFD symbol information for that slot. If the UE is instructed which symbols behave as SBFD, the UE may determine that only those symbols within a slot that are instructed to behave as SBFD are used for SBFD operation and that the remaining symbols behave as non-SBFD. And/or if the UE is instructed with non-SBFD operation symbol information, the UE may determine that only those symbols within that slot that are not instructed to behave as non-SBFD are used for SBFD operation and that those symbols that are instructed to behave as non-SBFD are behaved as non-SBFD.

If a UE is instructed to operate in SBFD for a specific slot and is not instructed for additional symbol-level SBFD/non-SBFD operation information, the device may assume that all symbols in that slot are operating in SBFD.

Additionally/independently, when the UE is instructed to operate as non-SBFD for a specific slot, the UE may additionally be instructed which symbols behave as SBFD and/or which behave as non-SBFD for that slot. If a UE is instructed which symbols behave as SBFD for a specific slot, the UE may determine that only those symbols within that slot that are instructed to behave as SBFD are used for SBFD operation and that the remaining symbols behave as non-SBFD. And/or if the UE is instructed with non-SBFD operation symbol information, the UE may determine that only those symbols within that slot that are not instructed to behave as non-SBFD are used for SBFD operation and that those symbols that are instructed to behave as non-SBFD are behaved as non-SBFD.

If a UE is instructed to behave as non-SBFD for a specific slot, and is not instructed for additional symbol-level SBFD/non-SBFD operation information, the UE may determine that all symbols in that slot behave as non-SBFD.

Depending on the embodiment, it may be determined whether SBFD/non-SBFD operation information is applied at the slot level or symbol level according to TDD configuration information. For example, for a slot where all symbols in the slot are directed by tdd-UL-DL-ConfigurationCommon to be a downlink, i) if the slot is instructed to operate as SBFD, the UE may determine that SBFD operation is performed on all symbols in the slot.

Meanwhile, in the case of a slot in which only some symbols in the slot are indicated as downlink by tdd-UL-DL-ConfigurationCommon and the remaining symbols are determined as uplink and/or flexible, i) if the slot is instructed to operate as SBFD, the UE may determine that it operates as SBFD for the symbols indicated in the downlink within the slot. ii) In this case, for symbols determined to be flexible or uplink within the slot, the UE can determine whether to operate SBFD/non-SBFD by providing additional instructions. For example, this indication may be indicated at a symbol level (e.g., start symbol and symbol duration information).

iii) Additionally, for symbols determined to be uplink within the corresponding slot, the UE may always be determined to operate as non-SBFD. In this case, the UE may determine SBFD/non-SBFD operation for symbols determined to be flexible within that slot by additional instructions. These instructions may, for example, be at the symbol level (e.g., starting symbol and symbol duration information).

The UE can use the above method to determine the SBFD/non-SBFD type applied to a specific symbol in a specific slot. Through this, in the symbol determined to be the SBFD type, it is determined that the cell is performing an SBFD-based operation, and subband-based DL reception and UL transmission operations can be performed. On the other hand, in symbols determined to be non-SBFD types, it is determined that the cell is performing an existing TDD-based operation, and TDD-based DL reception and UL transmission operations using all frequency resources can be performed.

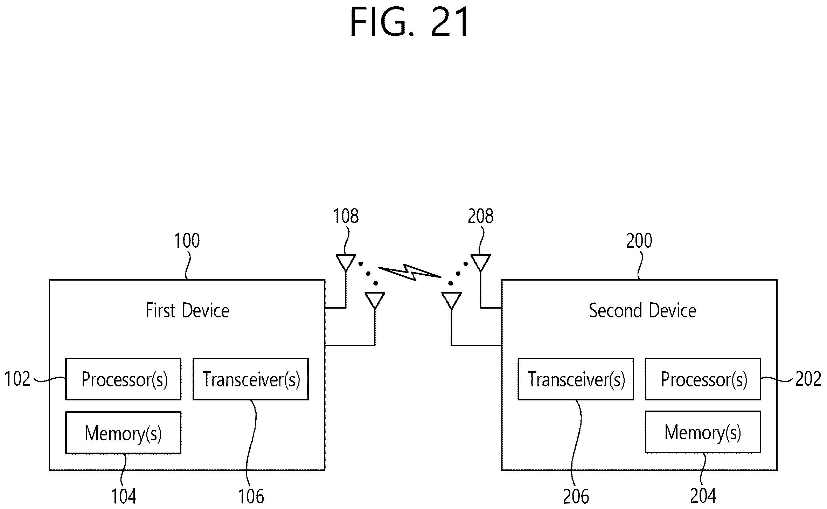

Referring to FIG. 21, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip. The processor 102 receives time division duplex (TDD) configuration information informing the link direction, and type configuration information informing whether it is a full duplex (FD) type or a half duplex (HD) type. For a specific slot comprising symbols having different link directions, the type configuration information independently informs the FD type or the HD type for the symbols having different link directions.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip. The processor 202 transmits to the UE TDD configuration information informing the link direction, and type configuration information informing whether it is the FD type or the HD type. For a specific slot comprising symbols having different link directions, the type configuration information informs the FD type or the HD type independently for the symbols having different link directions.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) having an instruction to be executed by at least one processor to perform operations includes: receiving time division duplex (TDD) configuration information informing the link direction, and receiving type configuration information informing whether it is a full duplex (FD) type or a half duplex (HD) type. For a specific slot comprising symbols having different link directions, the type configuration information independently informs the FD type or the HD type for the symbols having different link directions.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

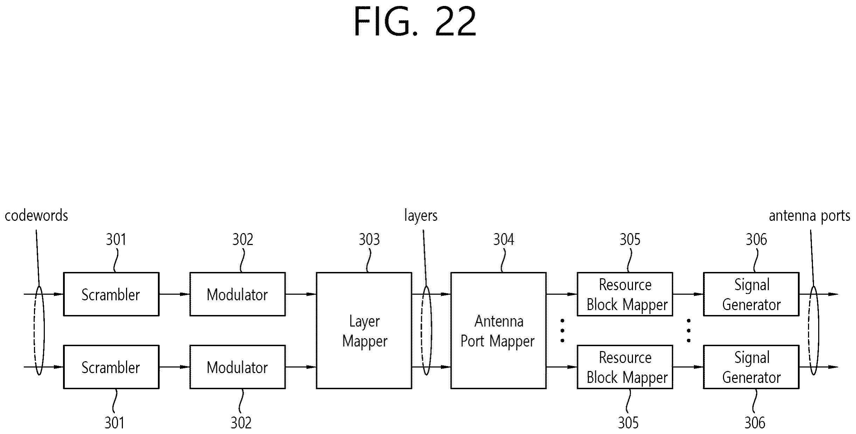

FIG. 22 shows an example of a structure of a signal processing module. Herein, signal processing may be performed in the processors 102 and 202 of FIG. 21.

Referring to FIG. 22, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

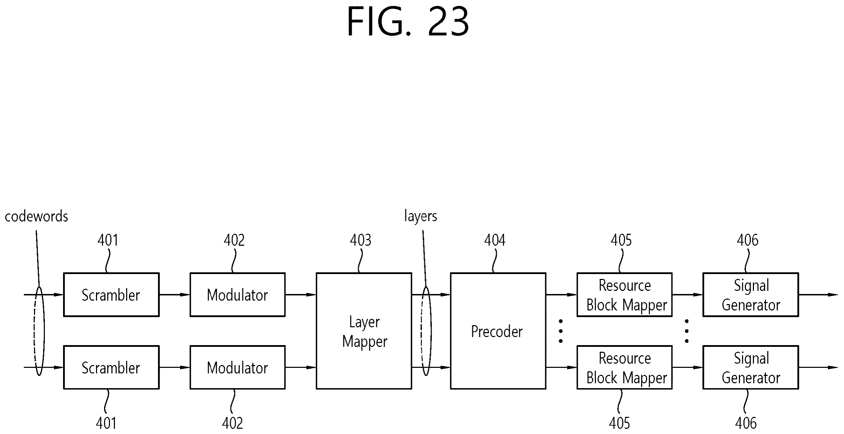

FIG. 23 shows another example of a structure of a signal processing module in a transmitting device. Herein, signal processing may be performed in a processor of a UE/BS, such as the processors 102 and 202 of FIG. 21.

Referring to FIG. 23, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

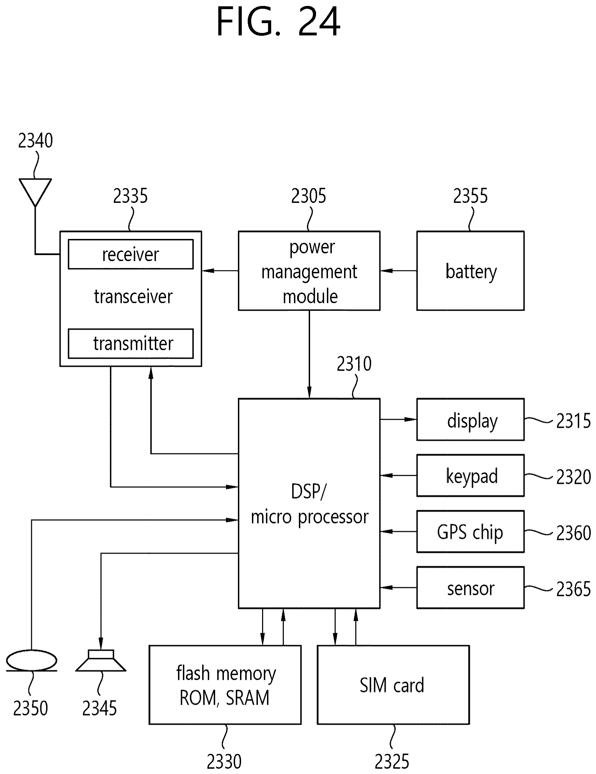

FIG. 24 illustrates an example of a wireless communication device according to an implementation example of the present disclosure.

Referring to FIG. 24, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 24 may be the processors 102 and 202 in FIG. 21.

The memory 2330 is connected to the processor 2310 and stores information related to operations of the processor. The memory may be located inside or outside the processor and connected to the processor through various techniques such as wired connection and wireless connection. The memory 2330 in FIG. 24 may be the memories 104 and 204 in FIG. 21.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

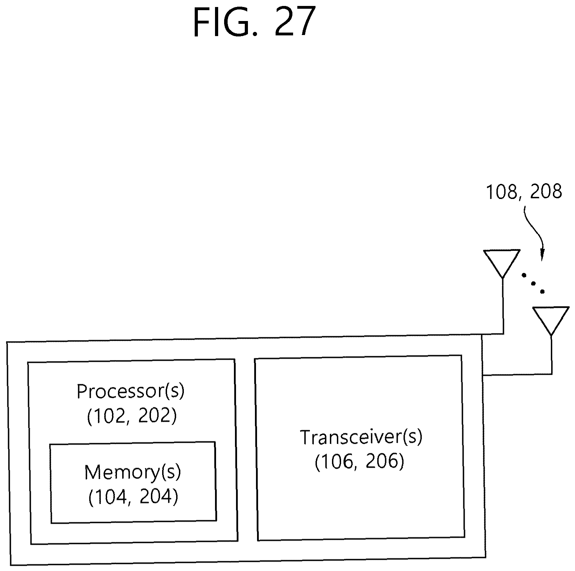

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 24 may be the transceivers 106 and 206 in FIG. 27.

Although not shown in FIG. 24, various components such as a camera and a universal serial bus (USB) port may be additionally included in the UE. For example, the camera may be connected to the processor 2310.

FIG. 24 is an example of implementation with respect to the UE and implementation examples of the present disclosure are not limited thereto. The UE need not essentially include all the components shown in FIG. 24. That is, some of the components, for example, the keypad 2320, the GPS chip 2360, the sensor 2365 and the SIM card 2325 may not be essential components. In this case, they may not be included in the UE.

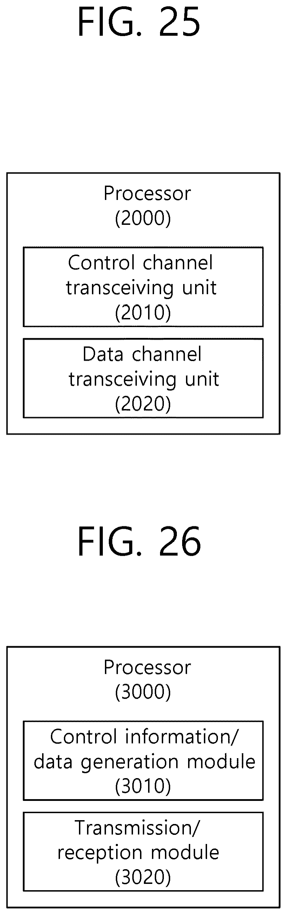

FIG. 25 shows an example of the processor 2000.

Referring to FIG. 25, The processor 2000 may include a control channel transceiver 2010 and a data channel transceiver 2020. For example, the processor 2000 may execute the methods described in FIGS. 16 to 24 from the UE perspective. The processor 2000 may be an example of the processors 102 and 202 of FIG. 21.

FIG. 26 shows an example of the processor 3000.

Referring to FIG. 26, The processor 3000 may include a control information/data generation module 3010 and a transmit/receive module 3020. The processor 3000 may execute the methods described in FIGS 16 to 24, for example, from the perspective of a base station or network. The processor 3000 may be an example of the processors 102, 202 of FIG. 21.

FIG. 27 shows another example of a wireless device.

Referring to FIG. 27, the wireless device may include one or more processors 102 and 202, one or more memories 104 and 204, one or more transceivers 106 and 206 and one or more antennas 108 and 208.

The example of the wireless device described in FIG. 27 is different from the example of the wireless described in FIG. 21 in that the processors 102 and 202 and the memories 104 and 204 are separated in FIG. 21 whereas the memories 104 and 204 are included in the processors 102 and 202 in the example of FIG. 27. That is, the processor and the memory may constitute one chipset.

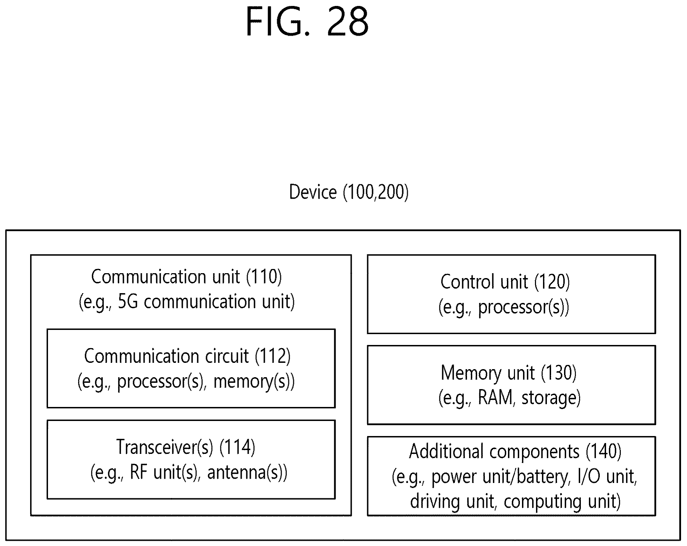

FIG. 28 shows another example of a wireless device applied to the present specification. The wireless device may be implemented in various forms according to a use-case/service.

Referring to FIG. 28, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 34, the vehicles 100b-1, 100b-2 of FIG. 34, the XR device 100c of FIG. 34, the hand-held device 100d of FIG. 34, the home appliance 100e of FIG. 34, the IoT device 100f of FIG. 34, a digital broadcast UE, a hologram device, a public safety device, an MTC device, a medicine device, a fintech device (or a finance device), a security device, a climate/environment device, the AI server/device 400 of FIG. 34, the BSs 200 of FIG. 34, a network node, etc. The wireless device may be used in a mobile or fixed place according to a use-example/service.

In FIG. 28, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and non-volatile memory. volatile memory) and/or a combination thereof.

A hand-held device to which this specification applies is exemplified. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

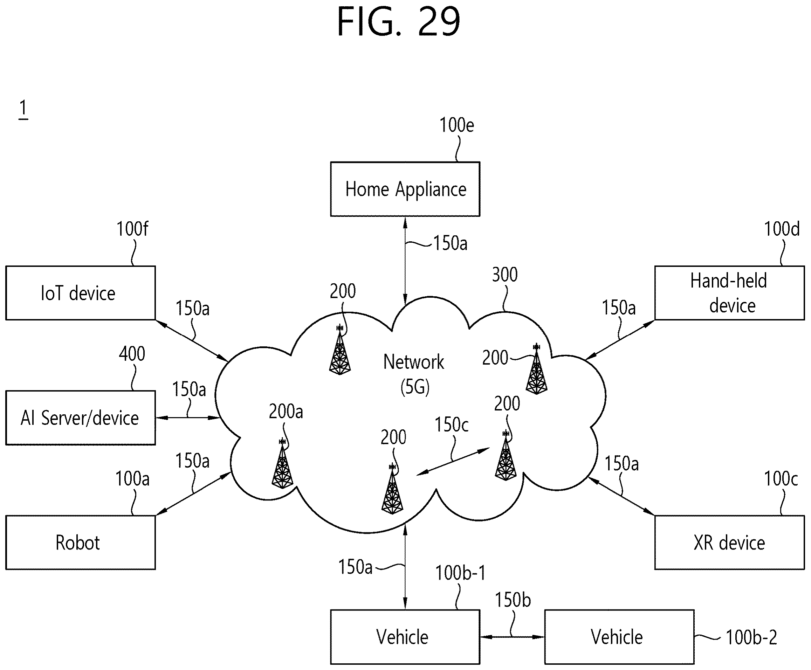

FIG. 29 illustrates a communication system 1 applied to the present specification.

Referring to FIG. 29, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 6. For convenience of explanation, among the frequency ranges that are used in an NR system, FR1 may mean a "sub 6GHz range", and FR2 may mean an "above 6GHz range" and may also be referred to as a millimeter wave (mmW).

**[Table 6]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 7 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

**[Table 7]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

## Claims

1. A method of operating a user equipment (UE) in a wireless communication system, the method comprising:
receiving time division duplex (TDD) configuration information for a link direction; and
receiving type configuration information informing a full duplex (FD) type or a half duplex (HD) type,
wherein the FD type is a duplex type capable of simultaneously performing uplink operation and downlink operation using different frequency bands within a slot, and the HD type is a duplex type capable of performing either uplink operation or downlink operation within a slot, and
wherein, for a specific slot comprising symbols having different link directions, the type configuration information independently informs the FD type or the HD type for the symbols having different link directions.

2. The method of claim 1, wherein, for a specific period comprising a plurality of slots, the type configuration information informs the FD type or the HD type independently for downlink symbols and flexible symbols of remaining slots except for slots having only uplink symbols.

3. The method of claim 2, wherein the UE determines that slots having only the uplink symbols are slots of the HD type.

4. The method of claim 2, wherein the type configuration information comprises a bitmap comprising a number of bits equal to a number of the remaining slots, and
wherein the bitmap informs the FD type or the HD type for downlink symbols contained in each of the remaining slots.

5. The method of claim 2, wherein the type configuration information comprises a bitmap comprising a number of bits equal to a number of the remaining slots, and
wherein the bitmap informs the FD type or the HD type for flexible symbols contained in each of the remaining slots.

6. The method of claim 2, wherein the type configuration information comprises information for a starting slot where a downlink symbol operates as the FD type among the remaining slots and slot duration information.

7. The method of claim 6, wherein the starting slot is indicated through an offset value relative to a first slot among the plurality of slots.

8. The method of claim 2, wherein the type configuration information comprises information for a starting slot where a flexible symbol operates as the FD type among the remaining slots and slot duration information.

9. The method of claim 8, wherein the starting slot is indicated through an offset value relative to a first slot comprising a flexible symbol among the plurality of slots.

10. The method of claim 1, wherein, for a specific period comprising a plurality of slots, the type configuration information informs the FD type or the HD type independently on a slot-by-slot basis for downlink slots comprising only downlink symbols and for flexible slots comprising flexible symbols.

11. The method of claim 10, wherein the type configuration information comprises a bitmap comprising a number of bits equal to a number of the downlink slots, and the bitmap informs, for each of the downlink slots, the FD type or the HD type on a slot-by-slot basis.

12. The method of claim 10, wherein the type configuration information comprises a bitmap comprising a number of bits equal to a number of the flexible slots, and the bitmap informs, for flexible symbols contained in each of the flexible slots, the FD type or the HD type on a slot-by-slot basis.

13. The method of claim 10, wherein the type configuration information comprises information for a starting slot where a downlink symbol operates as the FD type among the downlink slots and slot duration information.

14. The method of claim 13, wherein the starting slot is indicated through an offset value relative to a first slot of the plurality of slots.

15. The method of claim 10, wherein the type configuration information comprises information for a starting slot where a flexible symbol operates as the FD type among the flexible slots and slot duration information.

16. The method of claim 15, wherein the starting slot is indicated through an offset value relative to a first slot comprising a flexible symbol among the plurality of slots.

17. A user equipment (UE), the UE comprising:
at least one transceiver;
at least one memory; and
at least one processor operably coupled to the at least one memory and the at least one transceiver, wherein the at least one processor is adapted to:
receive time division duplex (TDD) configuration information for a link direction; and
receive type configuration information informing a full duplex (FD) type or a half duplex (HD) type,
wherein the FD type is a duplex type capable of simultaneously performing uplink operation and downlink operation using different frequency bands within a slot, and the HD type is a duplex type capable of performing either uplink operation or downlink operation within a slot, and
wherein, for a specific slot comprising symbols having different link directions, the type configuration information independently informs the FD type or the HD type for the symbols having different link directions.

18. An apparatus of a user equipment (UE), the apparatus comprising:
at least one memory; and
at least one processor operably coupled to the at least one memory,
wherein the at least one processor is adapted to:
receive time division duplex (TDD) configuration information for a link direction; and
receive type configuration information informing a full duplex (FD) type or a half duplex (HD) type,
wherein the FD type is a duplex type capable of simultaneously performing uplink operation and downlink operation using different frequency bands within a slot, and the HD type is a duplex type capable of performing either uplink operation or downlink operation within a slot, and
wherein, for a specific slot comprising symbols having different link directions, the type configuration information independently informs the FD type or the HD type for the symbols having different link directions.

19. At least one computer readable medium (CRM) having instructions to be executed by at least one processor to perform operations includes:
receiving time division duplex (TDD) configuration information for a link direction; and
receiving type configuration information informing a full duplex (FD) type or a half duplex (HD) type,
wherein the FD type is a duplex type capable of simultaneously performing uplink operation and downlink operation using different frequency bands within a slot, and the HD type is a duplex type capable of performing either uplink operation or downlink operation within a slot, and
wherein, for a specific slot comprising symbols having different link directions, the type configuration information independently informs the FD type or the HD type for the symbols having different link directions.

20. A method of operating a base station in a wireless communication system, the method comprising:
transmitting, to a user equipment (UE), time division duplex (TDD) configuration information for a link direction; and
transmitting, to the UE, type configuration information informing a full duplex (FD) type or a half duplex (HD) type,
wherein the FD type is a duplex type capable of simultaneously performing uplink operation and downlink operation using different frequency bands within a slot, and the HD type is a duplex type capable of performing either uplink operation or downlink operation within a slot, and
wherein, for a specific slot comprising symbols having different link directions, the type configuration information independently informs the FD type or the HD type for the symbols having different link directions.

21. A base station (BS), the BS comprising:
at least one transceiver;
at least one memory; and
at least one processor operably coupled to the at least one memory and the at least one transceiver, wherein the at least one processor is adapted to:
transmit, to the UE, type configuration information informing a full duplex (FD) type or a half duplex (HD) type,
wherein the FD type is a duplex type capable of simultaneously performing uplink operation and downlink operation using different frequency bands within a slot, and the HD type is a duplex type capable of performing either uplink operation or downlink operation within a slot, and
wherein, for a specific slot comprising symbols having different link directions, the type configuration information independently informs the FD type or the HD type for the symbols having different link directions.
